# EUROPEAN PATENT SPECIFICATION

(11) **EP 3 029 953 B1**
(45) Date of publication and mention of the grant of the patent: **14.03.2018**
(21) Application number: 14306946.6
(22) Date of filing: 04.12.2014
(51) Int. Cl.: H04Q 11/00

(54) **Input module and central control unit for a switching system and switching system thereof**
Eingabemodul sowie zentrale Steuereinheit für ein Umschaltsystem und Umschaltsystem dafür
Module d'entrée et unité de commande centrale destinée à un système de commutation et son système de commutation

(43) Date of publication of application: 08.06.2016
(73) Proprietor: ALCATEL LUCENT, 92100 Boulogne-Billancourt (FR)
(72) Inventor: Lautenschlaeger, Wolfram, 70435 Stuttgart (DE); Franz, Bernd, 70435 Stuttgart (DE)
(74) Representative: Browne, Robin Forsythe

(56) References cited:
- US-B1- 6 542 655
- AVINASH KARANTH KODI ET AL: "Energy-Efficient and Bandwidth-Reconfigurable Photonic Networks for High-Performance Computing (HPC) Systems", IEEE JOURNAL OF SELECTED TOPICS IN QUANTUM ELECTRONICS, IEEE SERVICE CENTER, PISCATAWAY, NJ, US, vol. 17, no. 2, 1 March 2011 (2011-03-01), pages 384-395, XP011372603, ISSN: 1077-260X, DOI: 10.1109/JSTQE.2010.2051419
- KESLASSY I ET AL: "SCALING INTERNET ROUTERS USING OPTICS", COMPUTER COMMUNICATION REVIEW, ACM, NEW YORK, NY, US, vol. 33, no. 4, 1 October 2003 (2003-10-01), pages 189-200, XP001224080, ISSN: 0146-4833

## Description

### FIELD OF THE INVENTION

The present invention relates to optical switches/routers in optical telecommunication for switching/routing data packets via high-capacity communication lines, and more particularly but not exclusively, to optical switches/routers for switching/routing data traffic of data center networks with an overall data rate of one petabit per second or even larger.

### BACKGROUND

This section introduces aspects that may be helpful in facilitating a better understanding of the invention. Accordingly, the statements of this section are to be read in this light and are not to be understood as admission about what is in the prior art.

More and more increasing data traffic in so-called data center networks demands for higher capacity of switches/routers within the data center networks. Today switches/routers provide a capacity in an order of several tens of terabit per second. It will take not much time when switches/routers with a capacity of petabit per second will be required for future data center networks. Problems to be solved for such high capacity switches/routers are amongst others space requirement, power consumption, number of electrical-to-optical-to-electrical converters and interconnection between the different stages of such a switch/router.

Today's switches/routers for data rates in the order of terabit per second are working completely electrically. This means that optical signals carrying IP packets (IP = Internet Protocol) are received at input ports of the switches/routers and are converted into electrical signals. The electrical signals are switched/routed within a switch/router to output ports of the switches/routers according to a destination address of the IP packets and are converted into further optical signals.

When data rates are going to be increased to one or several petabits per second a processing capacity will soon reach a technical limit because of limitations of electronic circuits to be used in such switches/routers. Especially a further down scaling of a size of the CMOS chipsets may approach its limits soon. By overcoming the technological limitations of electronic circuits a hybrid approach have been proposed recently. Switches/routers based on the hybrid approach may be configured to switch/route data streams with a data rate above a predefined data rate (so-called "large data streams") via optical signals and further data streams with a low data rate or single IP packets with a data rate below the predefined data rate (so-called "small data streams") via electrical signals in parallel. But such switches/routers have the problem to identify the large data streams and the small data streams and a partitioning of the small data streams on electrical routing/switching paths and of the large data streams on optical routing/switching paths is not possible for every ratio between a number of large data streams and a number of small data streams.

"Energy-Efficient and Bandwidth-Reconfigurable Photonic Networks for High-Performance Computing (HPC) Systems" by Avinash Karanth Kodi and Ahmed Louri in IEEE Journal of Selected Topics in Quantum Electronics, Vol. 17, No. 2, March/April 2011 discloses a reconfigurable optoelectronic architecture and a performance adaptive algorithm for implementing dynamic bandwidth reallocation (DBR) and dynamic power management (DPM). Optoelectronic boards have inter-board optical interfaces to communicate with other boards using fixed wavelengths. Each board includes four electrical nodes and a common bidirectional crossbar switch and a reconfiguration controller.

US 6,542,655 B1 discloses a crossconnect switch using wavelength routers and space switches. A nonblocking cross-connect switch consists of a NxN wavelength router combined with N tunable lasers, N modulators and N receivers. Each input signal must be produced by a multiwavelength laser capable of N wavelengths.

### SUMMARY

An object of the embodiments of the invention is to provide a switch or router which is able to handle overall data rates in the order of one petabit per second or several petabits per second and which overcomes the above mentioned problems.

The object is achieved by an input module for a switching system. The input module contains at least one input port which is configured to receive at least one input data stream. The input module further contains a processing unit which is configured to determine, whether a data rate of the at least one input data stream to be transmitted from the input module to one of at least two output modules of the switching system via an optical transmission path by a fixed wavelength optical signal having a fixed wavelength exceeds a maximum transmission capacity of the optical transmission path. The input module even further contains a packet switching module which is configured to switch at least first data packets of the at least one input data stream to the optical transmission path. The packet switching module is further configured to switch at least second data packets of the at least one input data stream to at least one further optical transmission path form the input module to the one of the at least two output modules, when the data rate of the at least one input data stream exceeds the maximum transmission capacity. The input module even further contains at least one fixed wavelength optical transmitter module which is configured to transmit via the optical transmission path the fixed wavelength optical signal that carries the at least first data packets and at least one tunable wavelength optical transmitter module which is reconfigurable to transmit via the at least one further optical transmission path a tunable wavelength optical signal which has a tunable wavelength and which carries the at least second data packets.

The object is further achieved by an output module for a switching system. The output module contains at least one optical receiver module which is configured to receive a fixed wavelength optical signal which has a fixed wavelength and which is configured to carry first data packets of at least one input data stream of at least one input module of the switching system. The output module further contains at least one further optical receiver module which is configurable to receive a tunable wavelength optical signal which has a tunable wavelength and which carries at least second data packets of the at least one input data stream and which is further reconfigurable to get tuned to the tunable wavelength, when a data rate of the input data stream exceeds a maximum transmission capacity of an optical transmission path of the switching system from the at least one input module to the output module. The output module even further contains a packet switching module which is configured to switch the first data packets and the at least second data packets to at least one output port of the packet switching module that maps to at least one destination address of the first data packets and the at least second data packets.

The object is even further achieved by a central control unit of a switching system. The central control unit contains at least one port which is configured to receive from an input module of the switching system an indication that a data rate of at least one input data stream received at the input module and to be transmitted to an output module of the switching system by a fixed wavelength optical signal having a fixed wavelength exceeds a maximum transmission capacity of an optical transmission path of the switching system from the input module to the output module. The at least one port is further configured to provide an instruction to the input module either to switch or not to switch at least second data packets of the at least one input data stream to at least one tunable wavelength optical transmitter module which is configurable to transmit a tunable optical signal having a tunable wavelength via at least one further optical transmission path of the switching system from the input module to the output module. The central control unit further contains a processor which is configured to determine, whether the at least second data packets shall be switched or not switched to the at least one tunable wavelength optical transmitter module based on a current data traffic load of the switching system. The current data traffic load considers for example a load situation at each one of at least two input modules of the switching system and at each one of at least two output modules of the switching system.

The object is even further achieved by a switching system for switching data traffic in a data network. The switching system contains at least two input modules as mentioned above which are configured to receive each at least one input data stream, which are further configured to transmit first data packets of the at least one input data stream by a fixed wavelength optical signal having a fixed wavelength via an optical transmission path from one of the two input modules to one of at least two output modules of the switching system and which are even further configured to transmit at least second data packets of the at least one input data stream by at least one tunable wavelength optical signal having a tunable wavelength via at least one further optical transmission path from the one of the two input modules to the one of at least two output modules, when a data rate of the at least one input data stream exceeds a maximum transmission capacity of the optical transmission path. The switching system even further contains an optical routing subsystem which is connected to the at least two input modules and to the at least two output modules and which is configured to route/switch the fixed wavelength optical signal via the optical transmission path and the at least one tunable wavelength optical signal via the at least one further optical transmission path from the one of the at least two input modules to the one of the at least two output modules. The switching system even further contains the at least two output modules which are configured to output at least one output data stream.

The object is even further achieved by a method for an input module of a switching system. The method for the input module contains the step of receiving at least one input data stream. The method for the input module further contains the step of determining, whether a data rate of the at least one input data stream to be transmitted from the input module to one of at least two output modules of the switching system via an optical transmission path by a fixed wavelength optical signal having a fixed wavelength exceeds a maximum transmission capacity of the optical transmission path. The method for the input module even further contains the step of switching at least first data packets of the at least one input data stream to the optical transmission path. The method for the input module even further contains the step of switching at least second data packets of the at least one input data stream to at least one further optical transmission path from the input module to the one of the at least two output modules, when the data rate of the at least one input data stream exceeds the maximum transmission capacity. The method for the input module even further contains the step of transmitting by at least one fixed wavelength optical transmitter module via the optical transmission path the fixed wavelength optical signal which carries the at least first data packets. The method for the input module even further contains the step of transmitting by at least one tunable wavelength optical transmitter module via the at least one further optical transmission path a tunable wavelength optical signal having a tunable wavelength and carrying the at least second data packets.

The object is even further achieved by a method for a central control unit of a switching system. The method for the central control unit contains receiving from an input module of the switching system an indication that a data rate of at least one input data stream received at the input module and to be transmitted to an output module of the switching system by a fixed wavelength optical signal having a fixed wavelength exceeds a maximum transmission capacity of an optical transmission path of the switching system from the input module to the output module. The method for the central control unit even further contains the step of determining, whether at least second data packets of the at least one input data stream shall be switched or not switched to at least one tunable wavelength optical transmitter module which is configurable to transmit a tunable optical signal having a tunable wavelength via at least one further optical transmission path of the switching system from the input module to the output module based on a current data traffic load of the switching system. The method for the central control unit even further contains the step of providing an instruction to the input module whether to switch or not to switch the at least second data packets to the at least one tunable wavelength optical transmitter module.

The object is even further achieved by a computer program product having a program code for performing a method according to one of the above mentioned methods for the input module or for the central control unit, when the computer program is executed on at least one computer, at least one processor, or at least one programmable hardware component.

The embodiments provide an advantage of providing a switch which is able to switch data traffic with a data rate of petabits per second or even larger. All data packets of the at least one input data stream can be switched within the switching system by using optical signals. The embodiments provide a further advantage over the hybrid approach (see last paragraph in background section) that an identification of small data streams and large data streams and a partitioning of the small data streams on a first processing chain for electrical signals carrying the small data streams and of the large data stream on a second processing chain for optical signals carrying the large data streams is not required. When most or all of the data streams carry small data packets or only few data packets per time unit no latency will be generated by the embodiments because all data packets can be processed in a same way by using optical signals carrying the data streams. In contrast, the electrical branch of the hybrid switch approach may get overloaded if most or all of the streams carry small data packets or may carry only few data packets per time unit. Then some of data streams have to wait and must be processed with a time delay.

In one embodiment, the input module further contains at least one traffic analyzer and buffer unit which is configured to analyze destination addresses of data packets of the at least one input stream being received via the at least one input port, further configured to buffer the data packets and even further configured to provide indications of the destination addresses to the processing unit. This embodiment provides a simple possibility to get an overall knowledge at the input module by the processing unit which data packets need to be transmitted to which destination addresses via which one of the at least two output modules of the switching system. This provides the advantage of determining an overload of one of the optical transmission paths in advance before any data packets may be dropped by the input module.

In a further preferred embodiment, the processing unit may further contain at least one traffic counter which may be configured to determine periodically within a predefined time period a current data rate or amount of data packets of the at least one input data stream to be switched to the optical transmission path based on the received indications. The processing unit may be even further configured to reconfigure the packet switching module to switch the at least second data packets to the at least one further optical transmission path, when the data rate of the at least one input data stream exceeds the maximum transmission capacity.

In an even further preferred embodiment, the processing unit is further configured to determine one of the optical transmission path and the at least one further optical transmission path to be applied for routing the data packets to the one of said at least two output modules and is further configured to provide indications to the at least one traffic analyzer and buffer unit about the determined optical transmission path or the determined at least one further optical transmission path.

According to a further embodiment, the data packets are buffered at the at least one traffic analyzer and buffer unit until the indications for the determined optical transmission path or the determined at least one further optical transmission path are received at the at least one traffic analyzer and buffer unit.

In a preferred embodiment, the input module may further contain at least one traffic aggregation unit which is configured to aggregate for the optical transmission path the first data packets having at least one destination address to be reachable via the output module and may further contain at least one further traffic aggregation unit which is configured to aggregate for the at least one further optical transmission path the at least second data packets having the at least one destination address to be reachable via the output module, when the data rate of the input data stream exceeds the maximum transmission capacity.

Preferably, the first data packets are aggregated and concatenated into at least one first frame and the at least second data packets are aggregated and concatenated into at least one second frame. In such a case the output module may further contain at least one traffic fragmentation unit which may be configured to fragment the at least one first frame into the first data packets and may further contain at least one further traffic fragmentation unit which is configured to fragment the at least one second frame into the at least second data packets, when the data rate of the input data stream exceeds the maximum transmission capacity. The aggregation and concatenation of data packets of small input data streams allows for high data rates such as 400 gigabit per second on the optical transmission paths of the switching system. At these high data rates single data packets cannot be switched economically due to relative slow switching speeds of optical switches. The preferred embodiment further provides the advantage, that data packets can be buffered to resolve contention within the optical network.

According to a further preferred embodiment, the input module may contain a number M of input ports, a number M-1 of tunable wavelength optical transmitter modules which may be each configurable to transmit a tunable wavelength optical signal having a tunable wavelength and a number N of fixed wavelength optical transmitter modules which may be each configured to transmit a dedicated fixed wavelength optical signal having a unique fixed wavelength and the number N of fixed wavelength optical transmitter modules may be equal to a number of the output module and at least one further output module of the switching system. The further preferred embodiment provides the benefit that in a worst case by which all input data streams arriving at the number M of input ports need to be switched to a same output module can be processed by a corresponding one of the number N of fixed wavelength optical transmitter modules and by the number M-1 of tunable wavelength optical transmitter modules which are each reconfigured and tuned to a wavelength that can be switched to the same output module. Thereby, all incoming data traffic can be optically switched by the switching system from the input module to an output module of the switching system without additional latency.

In an even further preferred embodiment, the input module further contains an interface to a central control unit of the switching system and the interface may be configured to receive an instruction from the central control unit for switching or not switching the at least second data packets to the at least one tunable wavelength optical transmitter module, when the data rate of the at least one input data stream exceeds the maximum transmission capacity.

Preferably, the at least one further optical receiver module of the output module may be tunable to the tunable wavelength, when the data rate of the input data stream exceeds the maximum transmission capacity. In such a case, the output module further contains an interface to a central control unit of the switching system and the interface may be configured to receive an instruction from the central control unit for tuning the at least one further optical receiver module to the tunable wavelength, when the data rate of the at least one input data stream exceeds the maximum transmission capacity. Furthermore in such a case, the central control unit may further contain at least one further port which is configured to provide to the output module the instruction to tune the at least one further optical receiver module to the tunable wavelength. This provides the benefit that the at least one further optical receiver module must not contain several fixed wavelength optical receiver sub-modules each preconfigured to one of all the tunable wavelengths producible by the at least one tunable wavelength optical transmitter module.

In even further preferred embodiments, the maximum transmission capacity may depend on at least one of the following:
- a predefined storage capacity of a traffic aggregation unit collecting data packets for the optical transmission path,
- a bandwidth of the at least one fixed wavelength optical transmitter module,
- a bandwidth of an optical component of the optical transmission path between the at least one fixed wavelength optical transmitter module and a receive module of an output module of the switching system such as a bandwidth of an optical transmission channel through an AWG (AWG = Arrayed Waveguide Grating),
- a bandwidth of the receiver module.

Preferably, the predefined storage capacity may be adapted to a time period for tuning the at least one tunable wavelength optical transmitter module to the tunable wavelength.

According to a further embodiment, the central control unit may be further configured to control the input module and at least one further input module of the switching system (RSS). The central control unit may be further configured to coordinate between the input module and the at least one further input module a switching of the at least second data packets to the at least one tunable wavelength optical transmitter module, when the data rate of the at least one input data stream exceeds the maximum transmission capacity of the optical transmission path. Thereby, a possibility for an overload situation at one output module or at several of the output modules can be reduced because a number of optical receiver modules at the output modules which can be tuned to respective tunable wavelengths of tunable wavelength optical transmitter modules of the input modules is limited and not every possible configuration of tunable wavelengths of the tunable wavelength optical transmitter modules at the various input modules can be satisfied.

In one embodiment, the optical routing subsystem may contain at least two fixed wavelength optical transmitter modules of each of the at least two input modules. The optical routing or switching subsystem further contains at least two tunable wavelength optical transmitter modules of the at least two input modules. The optical routing subsystem even further contains at least two optical multiplexer units each configured to multiplex at least two fixed wavelength optical signals of the at least two fixed wavelength optical transmitter modules of one the at least two input modules, an optical router unit which may be configured to route each fixed wavelength optical signal of the at least two multiplexed fixed wavelength optical signals to one of at least two output ports of the optical router unit based on a fixed wavelength of the fixed wavelength optical signal, at least two optical demultiplexer units each configured to demultiplex fixed wavelength optical signals being received from one of the at least two output port of the optical router unit into separate fixed wavelength optical signals having a single fixed wavelength for separate reception by one of at least two optical receiver modules of one of the at least two output modules. The optical routing subsystem even further contains at least two further optical router units each configured to route each tunable wavelength optical signal of at least two tunable wavelength optical signals of one of the at least two tunable wavelength optical transmitter modules of each of the at least two input modules based on a tunable wavelength of the tunable wavelength optical signal for separate reception by at least two further optical receiver modules of one of the at least two output modules. The at least two optical multiplexer units, the optical router unit and the at least two optical demultiplexer units establish a fixed full meshed interconnection per input module to output module relation. The at least two optical multiplexer units and the at least two optical demultiplexer units allows to reduce an overall number of optical fibres for operating the switching system. Such a meshed interconnection is not fully blocking free when arriving traffic at the input modules is not perfectly distributed among the output modules but nevertheless it establishes a minimum guaranteed and latency free forwarding of small data packets or even single packet traffic fractions. The at least two further optical router units establish a wavelength switched overlay interconnection network which is blocking free for any arriving traffic pattern in a time division way. The at least two further optical router units can be applied for traffic switching/routing when actual data traffic exceeds the capacity of at least one fixed wavelength optical transmitter module of at least one of the at least two input modules.

In a preferred embodiment, the optical routing subsystem contains a first number N of the at least two optical multiplexer units, a second number N of said at least two optical demultiplexer units, and a third number N of said optical router unit and of the at least two further optical router units and each one of the first number N, the second number N and the third number N is equal to a fourth number N of the at least two input modules. In such a case, the at least two optical multiplexer units may be for example N x 1 AWGs, the optical router unit and the at least two further optical router units may be for example an N x N AWGs and the at least two optical demultiplexer units may be for example 1xN AWGs.

Thereby, each one of the at least two optical multiplexer units may be configured to multiplex all fixed wavelength optical signals generated by one of the at least two input modules into the multiplexed fixed wavelength optical signal, each one of the at least two optical demultiplexer units may be configured to demultiplex one of the at least two demultiplexed fixed wavelength optical signals into all the fixed wavelength optical signals, a first one of the at least two further optical router units may be configured to receive all tunable wavelength optical signals transmitted by a first tunable wavelength optical transmitter modules of the at least two input modules and at least one second of the at least two further optical router units may be configured to receive all tunable wavelength optical signals transmitted by at least second tunable wavelength optical transmitter modules of the at least two input modules.

According to an even further preferred embodiment, the switching system contains a chassis which contains the optical router unit and the at least two further optical router units. Such an arrangement allows applying a single harness of optical fibers from each one of the input modules to the chassis and a single harness of optical fibers from each one of the output modules to the chassis.

In a further preferred embodiment, each one of the input modules is co-located with one of the output modules for providing a bidirectional transmission via combined input/output ports of the switching system. Thereby, only a single harness of optical fibers can be applied from each one of the co-located input/output modules to the chassis.

Further advantageous features of the embodiments of the invention are defined in the dependent claims and are described in the following detailed description.

### BRIEF DESCRIPTION OF THE FIGURES

The embodiments of the invention will become apparent in the following detailed description and will be illustrated by accompanying figures given by way of non-limiting illustrations.
Figure 1 shows schematically an input module for a switching system according to an exemplary embodiment of the invention.
Figure 2 shows schematically an output module for a switching system according to an exemplary embodiment of the invention.
Figure 3 shows schematically a switching system for switching data traffic in a data network according to an exemplary embodiment of the invention.
Figure 4 shows schematically a flow diagram of a method for operating an input module of a switching system according to a first exemplary embodiment of the invention.
Figure 5 shows schematically a flow diagram of a method for operating an input module of a switching system according to a second exemplary embodiment of the invention.
Figure 6 shows schematically a flow diagram of a method for operating a central control unit of a switching system according to an exemplary embodiment of the invention.

### DESCRIPTION OF THE EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

A splitting of processing functions across processing units shown in the Figures is not critical, and as can be understood by those skilled in the art that the number of processing units, the number of processing functions and an allocation of the processing functions to the processing units may vary without departing from the scope of the embodiments of the invention as defined in the appended claims. The number of the steps for performing the method(s) is not critical, and as can be understood by those skilled in the art that the number of the steps and the sequence of the steps may vary without departing from the scope of the embodiments of the invention as defined in the appended claims.

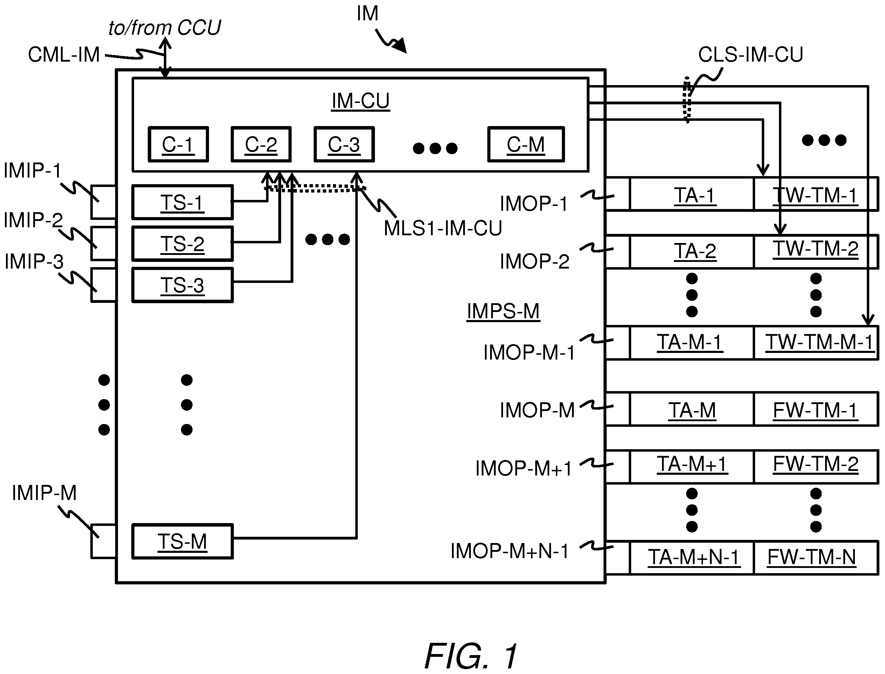

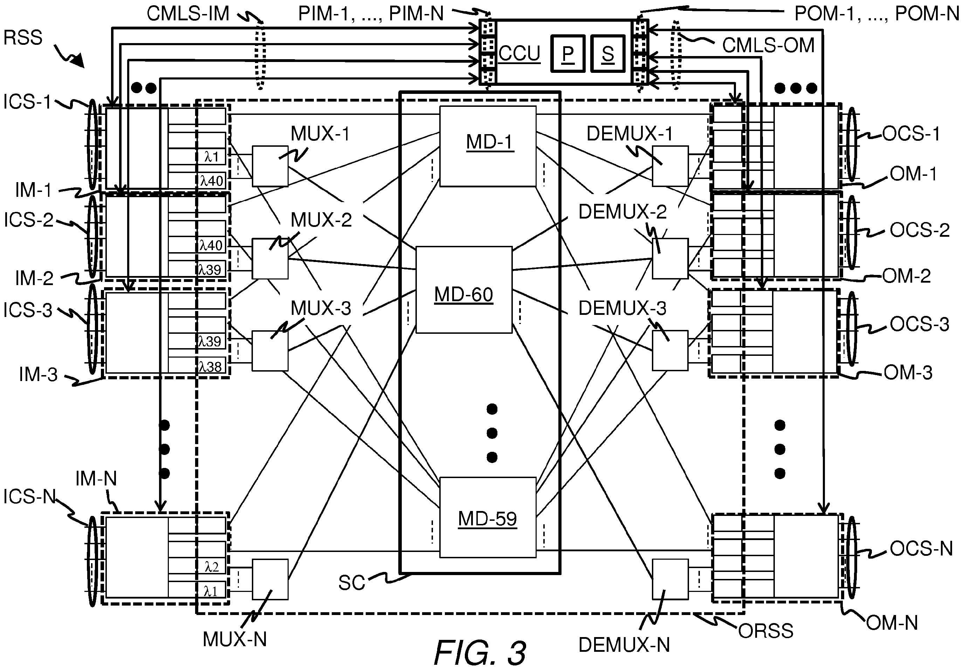

Figure 1 shows schematically an input module IM for a switching system RSS (see Figure 3) according to an exemplary embodiment. The term "switching system" is used throughout this specification as a system which may be implemented either as a switch or as a router depending on a corresponding protocol level which is applied for switching or for routing data packets.

The input module IM contains a packet switching module IMPS-M. The packet switching module IMPS-M may operate at one of a number of different levels in a protocol suite which is based for example on the so-called OSI model (OSI = Open Systems Interconnection). The packet switching module IMPS-M performs at the different levels a same functionality such as storing data packets and forwarding data packets.

The packet switching module IMPS-M may be for example based on a conventional bridge or a conventional network hub which interconnect multiple network segments of a so-called LAN (LAN = Local Area Network) at the so-called data link layer of the OSI model. Alternatively, the packet switching module IMPS-M may be based on a conventional router which operates at the so-called network layer of the OSI model and which is able to connect dissimilar kinds of network such as serial lines and LANs.

The packet switching module IMPS-M contains a number M of input ports IMIP-1, IMIP-2, IMIP-3, ..., IMIP-M and a number M+N-1 of output ports IMOP-1, IMOP-2, IMOP-3, ..., IMOP-M-1, IMOP-M, IMOP-M+1, ..., IMOP-M+N-1. The number N may be equal to a number of output modules OM-1, OM-2, OM-3, ..., OM-N (see Figure 3) to be used in the switching system RSS and may be exemplarily equal to 40. In further alternatives, the number N may be larger or smaller than 40 depending on a designated size and overall packet handling capability of the switching system RSS. The number M may be exemplarily equal to 60. In further alternatives, the number M may be larger or smaller than 60 depending on the designated size and packet handling capability of the packet switching module IMPS-M.

Each one of the input ports IMIP-1, IMIP-2, IMIP-3, ..., IMIP-M is configured to receive a single input data stream with data packets having a same destination address or several input data streams with data packets having a same destination address or with data packets having a first destination address and at least further data packets having at least one further destination address.

The packet switching module IMPS-M further contains a processing unit IM-CU. The processing unit IM-CU may be configured to provide conventional switching functions for switching data packets of an input data stream received by one of the input ports IMIP-1, IMIP-2, IMIP-3, ..., IMIP-M to one of the output ports IMOP-1, IMOP-2, IMOP-3, ..., IMOP-M-1, IMOP-M, IMOP-M+1, ..., IMOP-M+N-1. For such a purpose, the processing unit IM-CU contains for example a mapping table between destination addresses of the data packets of the input data stream in a first row, the output ports IMOP-1, IMOP-2, IMOP-3, ..., IMOP-M-1, IMOP-M, IMOP-M+1, ..., IMOP-M+N-1 in a second row and destination addresses reachable by each one of the output ports IMOP-1, IMOP-2, IMOP-3, ..., IMOP-M-1, IMOP-M, IMOP-M+1, ..., IMOP-M+N-1 in a third row. The processing unit IM-CU may be for example a software component or a hardware component such as a DSP (DSP = Digital Signal Processor), an ASIC (ASIC = Application-Specific Integrated Circuit), an FPGA (FPGA = Field-Programmable Gate Array) or any other processor. In a further alternative which is not shown by one of the Figures for simplification, the processing unit IM-CU may be not part of the packet switching module IMPS-M but a separate part of the input module IM.

Each one of a first group of output ports IMOP-M, IMOP-M+1, ..., IMOP-M+N-1 may be predefined for one of the output modules OM-1, OM-2, OM-3, ..., OM-N (see Figure 3) of the switching system RSS. When N is e.g. equal to 40 as mentioned above, then the first group of output ports IMOP-M, IMOP-M+1, ..., IMOP-M+N-1 contains 40 output ports. The input module IM is configurable in such a way that each one of a second group of output ports IMOP-1, IMOP-2, ..., IMOP-M-1 can be flexibly assigned to an output module of the group of output modules OM-1, OM-2, OM-3, ..., OM-N depending on a current traffic load for one of the first group of output ports IMOP-M, IMOP-M+1, ..., IMOP-M+N-1 as described in more detail below. When M is e.g. equal to 60 as mentioned above, then the second group of output ports IMOP-1, IMOP-2, ..., IMOP-M-1 may preferably contain 59 (M-1) output ports.

The input module IM preferably further contains a first group of so-called traffic aggregation units TA-M, TA-M+1, ..., TA-M+N-1 each connected to one of the first group of output ports IMOP-M, IMOP-M+1, ..., IMOP-M+N-1. Each one of the traffic aggregation units TA-M, TA-M+1, ..., TA-M+N-1 is configured to periodically aggregate first data packets for one of a first group of optical transmission paths from one of the first group of output ports IMOP-M, IMOP-M+1, ..., IMOP-M+N-1 of the input module IM to a predefined output module of the group of output modules OM-1, OM-2, OM-3, ..., OM-N. The first data packets may be aggregated from the data packets of the at least one input data stream which have a same destination address or different destination addresses which are reachable via the predefined output module. Preferably, each one of the first group of traffic aggregation units TA-M, TA-M+1, ..., TA-M+N-1 is configured to periodically concatenate one of the first groups of first data packets into a first frame. The first frame may contain a header which is followed by concatenated first data packets. The header may contain for example an indication for a number of concatenated data packets.

Each one of the traffic aggregation units TA-M, TA-M+1, ..., TA-M+N-1 may have a predefined storage capacity for collecting data packets for one of the first group of optical transmission paths. The predefined storage capacity may be preferably adapted to a time period, which is required to tune a corresponding tunable wavelength optical transmitter module TW-TM-1, TW-TM-2, ..., TW-TM-M-1 to a tunable wavelength which is configured to route a tunable wavelength optical signal transmitted by the tunable wavelength optical transmitter module TW-TM-1, TW-TM-2, ..., TW-TM-M-1 to a corresponding output module of the group of output modules OM-1, OM-2, OM-3, ..., OM-N which maps to the destination address of the data packets of the at least one input data stream. This means, a number of data packets which is contained in the first frame is also adapted to the time period for tuning the corresponding tunable wavelength optical transmitter module TW-TM-1, TW-TM-2, ..., TW-TM-M-1. Preferably, the predefined storage capacity should be further adapted to a maximum latency time. Thereby, a too large latency for the data packets to be switched by the input module can be avoided.

The input module IM further contains a number N of fixed wavelength optical transmitter modules FW-TM-1, FW-TM-2, ..., FW-TM-N each connected to an output port of one of the first group of traffic aggregation units TA-M, TA-M+1, ..., TA-M+N-1. In a preferred embodiment, the first frames are provided from one of the traffic aggregation units TA-M, TA-M+1, ..., TA-M+N-1 to a corresponding one of the fixed wavelength optical transmitter modules FW-TM-1, FW-TM-2, ..., FW-TM-N and the first frames are applied for modulating a fixed wavelength optical signal of the corresponding fixed wavelength optical transmitter modules FW-TM-1, FW-TM-2, ..., FW-TM-N in a continuous and sequential way.

Each one of the fixed wavelength optical transmitter modules FW-TM-1, FW-TM-2, ..., FW-TM-N is configured to transmit one of a group of fixed wavelength optical signals which carries the first data packets. Each one of the group of fixed wavelength optical signals is transmitted with a dedicated fixed wavelength that corresponds to one of the output modules OM-1, OM-2, OM-3, ..., OM-N. This means e.g. in case of N equal to 40, that the group of fixed wavelength optical signals may be transmitted with 40 different fixed wavelengths according to a predefined wavelength grid such as given for example in the ITU recommendation G.694.1. The fixed wavelength is used to route each of the fixed wavelength optical signals via an optical routing system ORSS (see Figure 3) to a corresponding one of the output modules OM-1, OM-2, OM-3, ..., OM-N.

The input module IM preferably further contains a second group of traffic aggregation units TA-1, TA-2, ..., TA-M-1 each connected to one of the second group of output ports IMOP-1, IMOP-2, ..., IMOP-M-1. Each one of the second group of traffic aggregation units TA-1, TA-2, ..., TA-M-1 is reconfigurable to aggregate at least one group of second data packets for one of a second group of optical transmission paths from one of the second group of output ports IMOP-1, IMOP-2, ..., IMOP-M-1 of the input module IM to one of the output module OM-1, OM-2, OM-3, ..., OM-N. Preferably, each one of the second group of traffic aggregation units TA-M, TA-M+1, ..., TA-M+N-1 is configured to periodically concatenate the second data packets into a second frame in a same way as described above for the first frame.

The input module IM further contains one or several traffic analyzer and buffer units TS-1, TS-2, TS-3, ..., TS-M. Each one of the traffic analyzer and buffer units TS-1, TS-2, TS-3, ..., TS-M may be preferably located at one of the input ports IMIP-1, IMIP-2, IMIP-3, ..., IMIP-M. Each one of the several traffic analyzer and buffer units TS-1, TS-2, TS-3, ..., TS-M is configured to analyze destination addresses of data packets of the at least one input stream which is received via a corresponding one of the input ports IMIP-1, IMIP-2, IMIP-3, ..., IMIP-M. Each one of the several traffic analyzer and buffer units TS-1, TS-2, TS-3, ..., TS-M is further configured to buffer the data packets and to provide indications of the destination addresses to the processing unit IM-CU via one of a group of signaling lines MLS1IM-CU.

The traffic analyzer and buffer units TS-1, TS-2, TS-3, ..., TS-M may be for example implemented as software components or by a hardware component such as a DSP (DSP = Digital Signal Processor), an ASIC (ASIC = Application-Specific Integrated Circuit), an FPGA (FPGA = Field-Programmable Gate Array) or any other processor.

The processing unit IM-CU preferably contains one or several traffic counters C-1, C-2, C-3, ..., C-M. Each one of the traffic counters C-1, C-2, C-3, ..., C-M may be configured to determine for one of the first group of optical transmission paths periodically within a predefined time period a current data packet rate or amount of data packets of the at least one input data stream to be switched to a corresponding one of the first group of optical transmission paths based on the received indications.

When such an indication via one of the first group MLS1-IM-CU of monitoring lines is received at the processing unit IM-CU, the processing unit IM-CU may verify whether at least one of the second group of output ports IMOP-1, IMOP-2, ..., IMOP-M-1 is currently not used for transmitting data packets from the input module IM to one of the output modules OM-1, OM-2, OM-3, ..., OM-N. When at least one (e.g. port IMOP-1) of the second group of output ports IMOP-1, IMOP-2, ..., IMOP-M-1 is currently not used for transmitting data packets from the input module IM to the one of the output modules OM-1, OM-2, OM-3, ..., OM-N, the processing unit IM-CU selects an output port (e.g. port IMOP-1) of these currently not used output ports and reconfigures the packet switching module IMPS-M in such a way, that all excess data packets which cannot be handled by the one of the first group of optical transmission paths are switched to the selected output port IMOP-1, IMOP-2, ..., IMOP-M-1. This can be done for example by using a further mapping table for the second group of output ports IMOP-1, IMOP-2, ..., IMOP-M-1 which is similar to the above mentioned mapping table.

Each one of the traffic counters C-1, C-2, C-3, ..., C-M may be further configured to reconfigure the packet switching module IMPS-M according to conventional means known to skilled persons in the art in such a way, that the at least second data packets are switched to one of second group of optical transmission paths, when the data rate of the at least one input data stream exceeds the maximum transmission capacity of one of the first group of optical transmission paths.

The processing unit IM-CU may be further configured to determine for each one of the data packets one of the first group of optical transmission paths or one of the second group of optical transmission paths to be applied for routing the data packet to the corresponding one of the output modules OM-1, OM-2, OM-3, ..., OM-N and may be further configured to provide indications to a corresponding one of the traffic analyzer and buffer units TS-1, TS-2, TS-3, ..., TS-M about the determined one of the first group of optical transmission paths or the determined one of the second group of optical transmission paths.

In one embodiment, the data packets may be buffered at the traffic analyzer and buffer units TS-1, TS-2, TS-3, ..., TS-M until the indications for the determined one of the first group of optical transmission paths or the determined one of the second group of optical transmission paths are received at a corresponding traffic analyzer and buffer unit TS-1, TS-2, TS-3, ..., TS-M.

The input module IM further contains a number M-1 of tunable wavelength optical transmitter modules TW-TM-1, TW-TM-2, ..., TW-TM-M-1 each connected to an output port of one of the second group of traffic aggregation units TA-1, TA-2, ..., TA-M-1. Each one of the tunable wavelength optical transmitter modules TW-TM-1, TW-TM-2, ..., TW-TM-M-1 is configurable to transmit one of a group of tunable wavelength optical signals which carries the second data packets. Each one of the group of tunable wavelength optical signals is transmitted with a tunable wavelength that corresponds to one of the output modules OM-1, OM-2, OM-3, ..., OM-N. This means, that the tunable wavelength is used to route each of the tunable wavelength optical signals via the optical routing system ORSS to a corresponding one of the output modules OM-1, OM-2, OM-3, ..., OM-N.

In other words, when one of the first group of optical transmission paths gets overloaded, the indication may be transmitted by a corresponding traffic analyzer and buffer units TS-1, TS-2, TS-3, ..., TS-M to the processing unit IM-CU. Based on the indication and based on an amount of the excess data packets, the processing unit IM-CU determines at least one of the second group of optical transmission paths which is not yet used for transmitting data packets to handle the excess data packets as at least one group of second data packets. If for example the excess data packets exceed twice the packet handling capacity of the one of the first group of optical transmission paths, the processing unit IM-CU may select two of the second group of optical transmission paths not yet used for transmitting excess data packets and the excess data packets may be split by the processing unit IM-CU into two second groups of the second data packets and each one of the two second groups of the second data packets is switched to a corresponding output port of the packet switching module IMPS-M.

When the processing unit IM-CU has decided which one of the second group of optical transmission paths shall transmit the excess data packets, the processing unit IM-CU may be configured to determine a tunable wavelength to be applied by a corresponding one of the tunable wavelength optical transmitter modules TW-TM-1, TW-TM-2, ..., TW-TM-M-1 for example based on the further mapping table which contains mappings between destination addresses of the excess data packets in a first column, reachable addresses via one of the output modules OM-1, OM-2, OM-3, ..., OM-N in a second column, indicators for the tunable wavelength optical transmitter modules TW-TM-1, TW-TM-2, ..., TW-TM-M-1 in a third column and tunable wavelengths to be applied in a fourth column. The processing unit IM-CU may be further configured to transmit an indication for the determined tunable wavelength to the corresponding one of the tunable wavelength optical transmitter modules TW-TM-1, TW-TM-2, ..., TW-TM-M-1 via one of a group CLS-IM-CU of control lines.

The processing unit IM-CU may further contain preferably an interface for a control and monitoring line CML-IM to a central control unit CCU (see Figure 3) of the switching system RSS which is described in the following in further detail with respect to Figure 3.

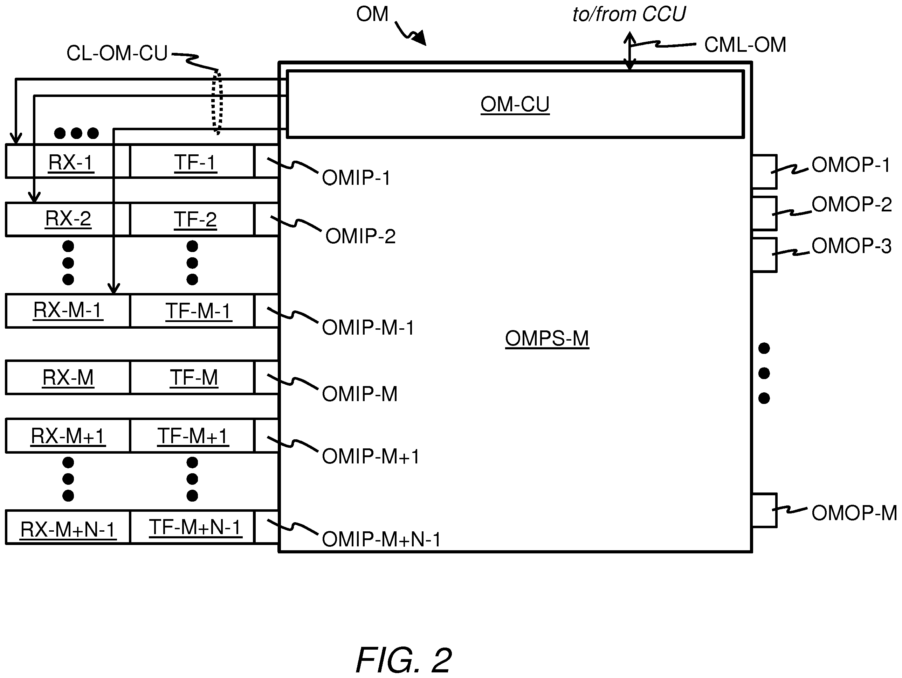

Figure 2 shows schematically an output module OM for the switching system RSS according to an exemplary embodiment. The output module OM contains a packet switching module OMPS-M. The packet switching module OMPS-M may operate similar to the packet switching module IMPS-M of the input module IM at one of the different levels in the protocol suite based for example on the OSI model. The packet switching module OMPS-M performs at the different levels a same functionality such as storing data packets and forwarding data packets.

The packet switching module OMPS-M may be for example based on a conventional bridge or a conventional network hub which interconnect multiple network segments of a so-called LAN (LAN = Local Area Network) at the so-called data link layer of the OSI model. Alternatively, the packet switching module OMPS-M may be based on a conventional router which operates at the so-called network layer of the OSI model and which is able to connect dissimilar kinds of network such as serial lines and LANs.

The packet switching module OMPS-M contains a number M+N-1 of input ports OMIP-1, OMIP-2, ..., OMIP-M-1, OMIP-M, OMIP+1, ..., OMIP-M+N-1 which may be equal to the number M+N-1 of output ports IMOP-1, IMOP-2, ..., IMOP-M-1, IMOP-M, IMOP-M+1, ..., IMOP-M+N-1 of the input module IM. Each one of the input ports OMIP-1, OMIP-2, ..., OMIP-M-1, OMIP-M, OMIP+1, ..., OMIP-M+N-1 is configured to receive data packets via one of the first group of optical transmission paths and the second group of optical transmission paths of the switching system RSS.

The packet switching module OMPS-M contains a number M of output ports OMOP-1, OMOP-2, ..., OMOP-M which may be preferably equal to the number M of input ports IMIP-1, IMIP-2, ..., IMIP-M of the input module. Each one of the output ports OMOP-1, OMOP-2, ..., OMOP-M is configured to output at least one output data stream which is equal to the at least one input data stream which is received by the input module IM. In further alternatives the packet switching module OMPS-M contains more or less than the number M of output ports OMOP-1, OMOP-2, ..., OMOP-M especially when no bidirectional communication is used on optical fibers which are connected to the switching system RSS.

The packet switching module OMPS-M further contains a processing unit OM-CU. The processing unit OM-CU may be configured to provide conventional switching functions for switching data packets from one of the input ports OMIP-1, OMIP-2, ..., OMIP-M-1, OMIP-M, OMIP+1, ..., OMIP-M+N-1 to one of the output ports OMOP-1, OMOP-2, ..., OMOP-M as a function of a destination address of the data packets. For such a purpose, the processing unit OM-CU contains for example a mapping table between destination addresses of the data packets in a first row, the output ports IMOP-1, IMOP-2, IMOP-3, ..., IMOP-M-1, IMOP-M, IMOP-M+1, ..., IMOP-M+N-1 in a second row and the destination addresses reachable by each one of the output ports IMOP-1, IMOP-2, IMOP-3, ..., IMOP-M-1, IMOP-M, IMOP-M+1, ..., IMOP-M+N-1 in a third row. The processing unit OM-CU may be for example a software component or a hardware component such as a DSP (DSP = Digital Signal Processor), an ASIC (ASIC = Application-Specific Integrated Circuit), an FPGA (FPGA = Field-Programmable Gate Array) or any other processor.

In a further alternative which is not shown by one of the Figures for simplification, the processing unit OM-CU may be not part of the packet switching module OMPS-M but a separate part of the output module OM.

The output module OM further contains a number N of optical receiver modules RX-M, RX-M+1, ..., RX-M+N-1. Each one of the optical receiver modules RX-M, RX-M+1, ..., RX-M+N-1 is configured to receive one of the fixed wavelength optical signals having a fixed wavelength which are transmitted by one of the fixed wavelength optical transmitter modules FW-TM-1, FW-TM-2, ..., FW-TM-N of the input module IM.

The output module OM further contains a number M of further optical receiver modules RX-1, RX-2, ..., RX-M-1. Each one of the further optical receiver modules RX-1, RX-2, ..., RX-M-1 is configurable to receive one of the tunable wavelength optical signals having a tunable wavelength which are transmitted by one of the tunable wavelength optical transmitter modules TW-TM-1, TW-TM-2, ..., TW-TM-M-1 of the input module IM, when a data rate of at least one of the input data streams exceeds the maximum transmission capacity of one of the first group of optical transmission paths of the switching system RSS.

In a preferred embodiment, the further optical receiver modules RX-1, RX-2, ..., RX-M-1 may be tunable to the tunable wavelength as applied by one of the the tunable wavelength optical transmitter modules TW-TM-1, TW-TM-2, ..., TW-TM-M-1. With respect to the preferred embodiment, the processing unit OM-CU may be further configured to transmit an indication for the tunable wavelength to be applied by one of the further optical receiver modules RX-1, RX-2, ..., RX-M-1 to the corresponding one of the further optical receiver modules RX-1, RX-2, ..., RX-M-1 via one of a group CL-OM-CU of control lines.

The processing unit OM-CU may further contain preferably an interface for a control and monitoring line CML-OM to the central control unit CCU of the switching system RSS which is described in the following in further detail with respect to Figure 3.

Figure 3 shows schematically the switching system RSS for routing/switching data traffic in a data network according to an exemplary embodiment. The switching system RSS is shown for a better understanding with an unfolded architecture with respect to input modules IM-1, IM-2, IM-3, ..., IM-N and output modules OM-1, OM-2, OM-3, ..., OM-N, so that the input modules IM-1, IM-2, IM-3, ..., IM-N are located at the left side of Figure 3 and the output modules OM-1, OM-2, OM-3, ..., OM-N are located at the right side of Figure 3.

The data network which is not shown for simplification may be for example as so-called data center network (DCN) which interconnects all components of a data center. Such DCNs need to be scalable and efficient for being able to connect tens or even hundreds of thousands of servers and for being able to handle growing demands of cloud computing. In further alternatives, the switching system RSS may be applied for IP core routing, MPLS switching (MPLS = Multi-Protocol Label Switching) or VLL/VPN infrastructure (VLL = Virtual Leased Line, VPN = Virtual Private Network) in so-called metro core networks or IP backbone networks.

The switching system RSS as described in the following with respect to Figure 3 is able to switch/route data traffic with a data rate of one petabit per second or even higher data rates which depends mainly on a number of input ports and output ports of packet switching modules and a number of optical transmission paths between input modules IM-1, IM-2, IM-3, ..., IM-N and output modules OM-1, OM-2, OM-3, ..., OM-N. When a maximum data rate of 400 Gigabit per second is assumed for each input port of for example 60 input ports of each input module of for example 40 input modules IM-1, IM-2, IM-3, ..., IM-N, the switching system RSS provides a switching/routing capacity of 0.96 petabits per second. The switching system RSS contains a number N of input modules IM-1, IM-2, IM-3, ..., IM-N. Each one of the input modules IM-1, IM-2, IM-3, ..., IM-N is configured according to one of the alternatives being described above for the input module IM and is connected to a group of input lines ICS-1, ICS-2, ICS-3, ..., ICS-N via the input ports IMIP-1, IMIP-2, IMIP-3, ..., IMIP-M of the input module IM (see Figure 1). The groups of input lines ICS-1, ICS-2, ICS-3, ..., ICS-N may use an electrical transmission technique known to skilled persons in the art or an optical transmission technique known to skilled persons in the art such as given in ITU recommendation G.709. When an optical transmission technique is applied, the input module IM may further contain o/e-converters (o/e = optical to electrical) connected to each one of the input ports IMIP-1, IMIP-2, IMIP-3, ..., IMIP-M which is not shown in any the Figures for simplification. Preferably for high data rates exceeding 10 gigabit per second per input line ICS-1, ICS-2, ICS-3, ..., ICS-N an optical transmission technique may be applied.

The fixed wavelength optical transmitter modules FW-TM-1, FW-TM-2, ..., FW-TM-N may be arranged and configured at the input modules IM-1, IM-2, IM-3, ..., IM-N preferably in a following way: At a first input module IM-1 a first fixed wavelength optical transmitter module FW-TM-1 at a first position may be operated with wavelength λ1, a second fixed wavelength optical transmitter module FW-TM-2 at a second position may be operated with wavelength λ2 and so on including a fixed wavelength optical transmitter module FW-TM-N at an Nth position may be operated with wavelength λN (e.g. λ40 in Figure 3). At a second input module IM-2 the first fixed wavelength optical transmitter module FW-TM-1 at the first position may be operated with wavelength λN (e.g. λ40 in Figure 3), the second fixed wavelength optical transmitter module FW-TM-2 at the second position may be operated with wavelength λ1 and so on including a fixed wavelength optical transmitter module FW-TM-N at an Nth position may be operated with wavelength λ39. At the further input modules IM-3, ..., IM-N the fixed wavelength optical transmitter modules FW-TM-1, FW-TM-2, ..., FW-TM-N are operated in a similar way including the Nth input module IM-N, which may be configured in such a way that the first fixed wavelength optical transmitter module FW-TM-1 at the first position may be operated with wavelength λ2, the second fixed wavelength optical transmitter module FW-TM-2 at the second position may be operated with wavelength λ3 and so on including the fixed wavelength optical transmitter module FW-TM-N at the Nth position may be operated with wavelength λ1.

The switching system RSS further contains a number N of output modules OM-1, OM-2, OM-3, ..., OM-N. Each one of the output modules OM-1, OM-2, OM-3, ..., OM-N is configured according to one of the alternatives being described above for the output module OM and is connected to a group of output lines OCS-1, OCS-2, OCS-3, ..., OCS-N via the output ports OMOP-1, OMOP-2, OMOP-3, ..., OMOP-M of the output module OM (see Figure 2). The groups of output lines OCS-1, OCS-2, OCS-3, ..., OCS-N may use one of the electrical transmission technique or one of the optical transmission techniques as mentioned above. When an optical transmission technique is applied, the output module OM may further contain e/o-converters (e/o = electrical to optical) connected to each one of the output ports OMOP-1, OMOP-2, OMOP-3, ..., OMOP-M which is not shown in any the Figures for simplification.

In a simplest embodiment which is not shown in any of the Figures for simplification, the switching system RSS contains two input modules and two output modules. The number N of input modules and output modules is not limited and may be e.g. equal to 40, lower than 40 or higher than 40, which is indicated by the index "N" in the reference numerals for the input modules IM-1, IM-2, IM-3, ..., IM-N and the output modules OM-1, OM-2, OM-3, ..., OM-N.

The switching system RSS preferably further contains the central control unit CCU which is configured to control the input modules IM-1, IM-2, IM-3, ..., IM-N via a first group of control and monitoring lines CMLS-IM and the output modules OM-1, OM-2, OM-3, ..., OM-N via a second group of control and monitoring lines CMLS-OM. The central control unit CCU contains ports PIM-1, ..., PIM-N. Each one of the ports PIM-1, ..., PIM-N may be configured to receive from one of the input modules IM-1, IM-2, IM-3, ..., IM-N an indication that a data rate of the at least one input data stream received at the one of the input modules IM-1, IM-2, IM-3, ..., IM-N and to be transmitted to one of the output modules OM-1, OM-2, OM-3, ..., OM-N by a fixed wavelength optical signal having a fixed wavelength exceeds the maximum transmission capacity of one of the first group of optical transmission paths of the switching system RSS from the one of the input modules IM-1, IM-2, IM-3, ..., IM-N to the one of the output modules OM-1, OM-2, OM-3, ..., OM-N and which may be further configured to provide an instruction to the one of the input modules IM-1, IM-2, IM-3, ..., IM-N whether to switch or not to switch at least second data packets of the at least one input data stream to the one of the second group of optical transmission paths. The central control unit CCU further contains a processor P which may be configured to determine, whether the at least second data packets shall be switched or shall be not switched to the one of the second group of optical transmission paths based on a current data traffic load of the switching system RSS. The current data traffic load may consider for example a load situation at each one of at least two input modules of the switching system RSS and at each one of at least two output modules of the switching system RSS.

In a preferred embodiment, the central control unit CCU may be further configured to coordinate across the input modules IM-1, IM-2, IM-3, ..., IM-N a switching of the at least second data packets to one of the second group of optical transmission paths, when the data rate of the at least one input data stream exceeds the maximum transmission capacity of one of the first group of optical transmission paths between one of the input modules IM-1, IM-2, IM-3, ..., IM-N and one of the output modules OM-1, OM-2, OM-3, ..., OM-N. The control and monitoring line CML-IM as shown in Figure 1 is one control and monitoring line of the first group of control and monitoring lines CMLS-IM. Such a coordination may be realized for example by using a tracking table, which is stored in a storage module S of the central control unit CCU. The tracking table may contain an overview, which one of the second group of optical transmission paths is currently applied for load distribution of one or several of the first group of optical transmission paths and a knowledge which one of the tunable wavelengths of one of the tunable wavelength optical transmitter modules TW-TM-1, TW-TM-2, ..., TW-TM-M-1 can be routed to which one of the further optical receiver modules RX-1, RX-2, ..., RX-M-1 of one of the output modules OM-1, OM-2, OM-3, ..., OM-N. The tracking table allows identifying unused optical transmission paths of the second group of optical transmission path and further allows determining the at least one tunable wavelength to be applied to route a tunable optical wavelength signal carrying the at least second data packets from a corresponding one of the input modules IM-1, IM-2, IM-3, ..., IM-N to a corresponding one of the output modules OM-1, OM-2, OM-3, ..., OM-N.

In a preferred embodiment, the central control unit CCU may be further configured to instruct via one of the second group of control and monitoring lines CMLS-OM one of the output modules OM-1, OM-2, OM-3, ..., OM-N to apply the determined at least one tunable wavelength as a reception wavelength at at least one of the further optical receiver modules RX-1, RX-2, ..., RX-M-1 of the one of the output modules OM-1, OM-2, OM-3, ..., OM-N, when the data rate of the at least one input data stream exceeds the maximum transmission capacity of the one of first group of optical transmission paths. The control and monitoring line CML-OM as shown in Figure 2 is one control and monitoring line of the second group of control and monitoring lines CMLS-OM.

In an alternative embodiment which is not shown in any of the Figures for simplification, the switching system RSS does not contain the central control unit CCU. In such a case, the input modules IM-1, IM-2, IM-3, ..., IM-N may be configured to directly indicate to a corresponding one of the output modules OM-1, OM-2, OM-3, ..., OM-N which tunable wavelength will be applied for which predefined time period at one of the tunable wavelength optical transmitter modules TW-TM-1, TW-TM-2, ..., TW-TM-M-1. Before the predefined time period expires the corresponding one of the input modules IM-1, IM-2, IM-3, ..., IM-N may send a further indication for a further predefined time period in which the corresponding tunable wavelength shall be applied.

The switching system RSS further contains an optical routing subsystem ORSS which is connected to the input modules IM-1, IM-2, IM-3, ..., IM-N and to the output modules OM-1, OM-2, OM-3, ..., OM-N. The optical routing subsystem ORSS contains the first group of optical transmission paths and the second group of optical transmission paths and is configured to route the fixed wavelength optical signals via the first group of optical transmission paths and the tunable wavelength optical signals via the second group of optical transmission paths from the input modules IM-1, IM-2, IM-3, ..., IM-N to the output modules OM-1, OM-2, OM-3, ..., OM-N.

For providing the first group of optical transmission paths, the optical routing subsystem ORSS contains optical multiplexer units MUX-1, MUX-2, MUX-3, ..., MUX-N. The optical multiplexer units MUX-1, MUX-2, MUX-3, ..., MUX-N are for example AWG devices (AWG = Arrayed Waveguide Grating). Each one of the optical multiplexer units MUX-1, MUX-2, MUX-3, ..., MUX-N is connected via optical fibers to the fixed wavelength optical transmitter modules FW-TM-1, FW-TM-2, ..., FW-TM-N of one of the input modules IM-1, IM-2, IM-3, ..., IM-N. When the number N of fixed wavelength optical transmitter modules FW-TM-1, FW-TM-2, ..., FW-TM-N is for example equal to 40, each of the AWG devices contain a so-called 40 x 1 AWG with 40 input waveguides and a single output waveguide. Each one of the optical multiplexer units MUX-1, MUX-2, MUX-3, ..., MUX-N is configured to multiplex the fixed wavelength optical signals of one of the input modules IM-1, IM-2, IM-3, ..., IM-N into one of a group of multiplexed fixed wavelength optical signals.

For providing the first group of optical transmission paths, the optical routing subsystem ORSS further contains an optical router unit MD-60 which is connected via further optical fibers to an output port of each one of the optical multiplexer units MUX-1, MUX-2, MUX-3, ..., MUX-N. Thereby, each of the optical fibers transports a number N of fixed optical wavelength signals. The optical router unit MD-60 is configured to route the fixed wavelength optical signals to the desired output module OM-1, OM-2, OM-3, ..., OM-N. The optical router unit MD-60 may be for example an AWG device. When the number N of fixed wavelength optical transmitter modules FW-TM-1, FW-TM-2, ..., FW-TM-N is for example equal to 40, the AWG device may contain a so-called 40 x 40 AWG with 40 input waveguides and 40 output waveguides. Such an AWG is described for example in J. Gripp "The IRIS Optical Packet Router A DARPA / MTO Project", International Workshop on the Future of Optical Networking (FON) OFC 2006", March 5, 2006.

For providing the first group of optical transmission paths, the optical routing subsystem ORSS even further contains optical demultiplexer units DEMUX-1, DEMUX-2, DEMUX-3, ..., DEMUX-N. The optical demultiplexer units DEMUX-1, DEMUX-2, DEMUX-3, ..., DEMUX-N are for example further AWG devices. Each one of the optical demultiplexer units DEMUX-1, DEMUX-2, DEMUX-3, ..., DEMUX-N is connected via an optical fiber to an output port of the optical router unit MD-60. When the number N of fixed wavelength optical transmitter modules FW-TM-1, FW-TM-2, ..., FW-TM-N is for example equal to 40, each of the further AWG devices may contain a so-called 1 x 40 AWG with a single input waveguide and 40 output waveguides. Each one the optical demultiplexer units DEMUX-1, DEMUX-2, DEMUX-3, ..., DEMUX-N is configured to demultiplex one of the group of demultiplexed fixed wavelength optical signals into single wavelength optical signals having one of the fixed wavelengths for separate reception by one of the optical receiver modules RX-M, RX-M+1, ..., RX-M+N-1 of one of the output modules OM-1, OM-2, OM-3, ..., OM-N.

The first group of optical transmission paths and its multiplexer units, demultiplexer units and optical router unit provide a fixed and fully meshed interconnect between the input modules IM-1, IM-2, IM-3, ..., IM-N and the output modules OM-1, OM-2, OM-3, ..., OM-N. The first group of optical transmission paths and its multiplexer units, demultiplexer units and optical router units allows to handle data traffic which is distributed in a more or less uniform way across the input modules IM-1, IM-2, IM-3, ..., IM-N and the output modules OM-1, OM-2, OM-3, ..., OM-N.

For providing the second group of optical transmission paths, the optical routing subsystem ORSS even further contains further optical router units MD-1, ..., MD-59. The further optical router units MD-1, ..., MD-59 are for example even further AWG devices. Each one of the further optical router units MD-1, ..., MD-59 is connected via optical fibers to one of the tunable wavelength optical transmitter modules TW-TM-1, TW-TM-2, ..., TW-TM-M-1 of each of the input modules IM-1, IM-2, IM-3, ..., IM-N. This means for example that a first optical router unit MD-1 is connected to tunable wavelength optical transmitter modules TW-TM-1 of input module IM-1, to tunable wavelength optical transmitter modules TW-TM-1 of input module IM-2, and so on including tunable wavelength optical transmitter modules TW-TM-1 of input module IM-M. In a same way, a second optical router unit is connected to tunable wavelength optical transmitter modules TW-TM-2 of input module IM-1, to tunable wavelength optical transmitter modules TW-TM-2 of input module IM-2 and so on including tunable wavelength optical transmitter modules TW-TM-1 of input module IM-M. In a similar way the remaining further optical router units including optical router unit MD-59 are connected to the further tunable wavelength optical transmitter modules of the input modules IM-1, IM-2, IM-3, ..., IM-N. When the number N of input modules IM-1, IM-2, IM-3, ..., IM-N is for example equal to 40, each of the even further AWG devices may contains a 40 x 40 AWG with a 40 input waveguides and 40 output waveguides.

Each one of the further optical router units MD-1, ..., MD-59 is configured to route a group of tunable wavelength optical signals from the input modules IM-1, IM-2, IM-3, ..., IM-N to the desired output modules OM-1, OM-2, OM-3, ..., OM-N.

The further optical router units MD-1, ..., MD-59 may be configured in such a way, that the tunable wavelength optical signals with increasing wavelength number arriving on one input fiber of the further optical router units MD-1, ..., MD-59 are distributed in a clockwise manner to output fibers.

Preferably, the number N of the optical multiplexer units MUX-1, MUX-2, MUX-3, ..., MUX-N and the number N of the optical demultiplexer units DEMUX-1, DEMUX-2, DEMUX-3, ..., DEMUX-N are equal to the number N of the input modules IM-1, IM-2, IM-3, ..., IM-N and the number M of the optical router unit MD-60 and of the further optical router units MD-1, ..., MD-59 is equal to the number M of the input ports IMIP-1, IMIP-2, IMIP-3, ..., IMIP-M of the input modules IM-1, IM-2, IM-3, ..., IM-N.

The second group of optical transmission paths including its optical router units MD-1, ..., MD-59 provide a wavelength switched overlay interconnection network which is used, when actual data traffic exceeds the capacity of at least one of the first group of optical transmission paths and the corresponding multiplexer units, demultiplexer units and router unit. This is especially the case, when the data traffic is not distributed in a uniform way across the input modules IM-1, IM-2, IM-3, ..., IM-N and the output modules OM-1, OM-2, OM-3, ..., OM-N. Also when incoming data traffic received at several input ports one of the input modules IM-1, IM-2, IM-3, ..., IM-N exceeds the maximum transmission capacity of one of the optical transmission paths of the first group of optical transmission paths the data traffic, which exceeds the maximum transmission capacity needs to be routed/switched via at least one of the second group of optical transmission paths. In a worst case scenario when all incoming data traffic received at one of the input modules IM-1, IM-2, IM-3, ..., IM-N needs to be switched/routed to one of the output modules OM-1, OM-2, OM-3, ..., OM-N one of the number N of the fixed wavelength optical transmitter modules FW-TM-1, FW-TM-2, ..., FW-TM-N of the one of the input modules IM-1, IM-2, IM-3, ..., IM-N and a number M-1 of the tunable wavelength optical transmitter modules TW-TM-1, TW-TM-2, ..., TW-TM-M-1 of the one of the input modules IM-1, IM-2, IM-3, ..., IM-N are required for transmitting the whole data traffic from the one of the input modules IM-1, IM-2, IM-3, ..., IM-N to the one of the output modules OM-1, OM-2, OM-3, ..., OM-N.

In a preferred embodiment, which is not shown by any of the Figures for simplification, the switching system RSS may be based on a so-called folded architecture for bi-directional data traffic. In such a case, each one of the input modules IM-1, IM-2, IM-3, ..., IM-N is co-located with one of the output modules OM-1, OM-2, OM-3, ..., OM-N as a combined input/output module (e.g. input module IM-1 is co-located with output module OM-1, input module IM-2 is co-located with output module OM-2 and so on). Also in such a case, instead of having separate groups of input lines ICS-1, ICS-2, ICS-3, ..., ICS-N and output lines OCS-1, OCS-2, OCS-3, ..., OCS-N groups of transmission lines may be applied which contain transmission lines which simultaneously work as an input line and an output line. Also in such a case, the functionality of the processing units IM-CU, OM-CU may be provided by a single processing unit in each one of the combined input/output modules.

In an even further preferred embodiment, the switching system RSS contains a chassis SC. The chassis SC may be configured to contain the optical router unit MD-60 and the further optical router units MD-1, ..., MD-59 (as indicated by a rectangle).

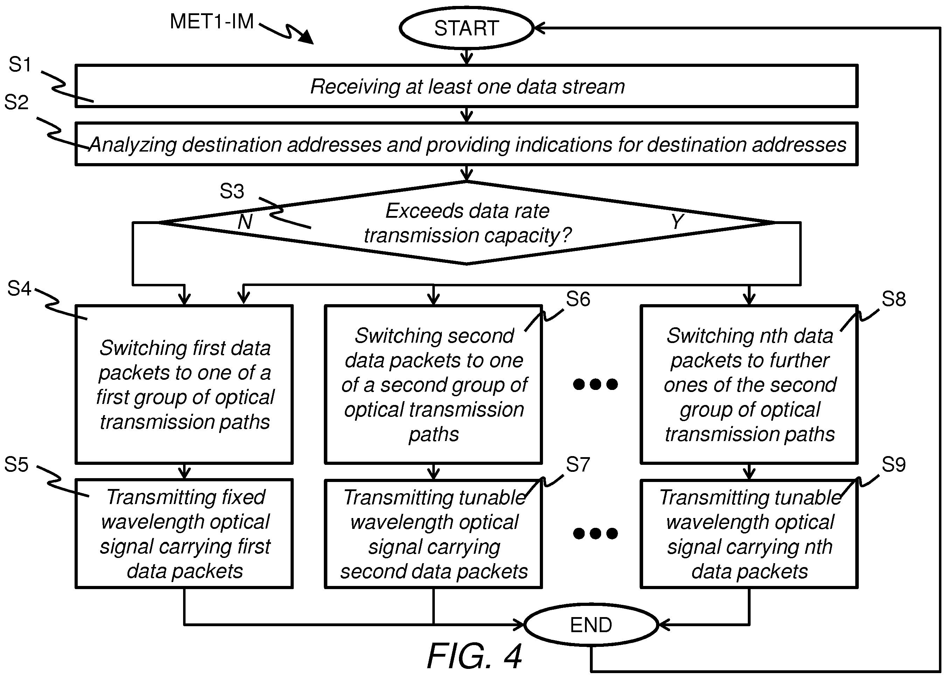

Figure 4 shows schematically a flow diagram of a method MET1-IM for operating the input module IM of the switching system RSS according to a first exemplary embodiment.

In a first step S1, the at least one data stream is received by at least one of the input ports IMIP-1, IMIP-2, IMIP-3, ..., IMIP-M of the input module IM.

In a further step S2, at least one of the traffic analyzer and buffer units TS-1, TS-2, TS-3, ..., TS-M which is responsible for the at least one of the input ports IMIP-1, IMIP-2, IMIP-3, ..., IMIP-M analyzes destination addresses of data packets of the at least one input stream, buffer the data packets and provides indications of the destination addresses to the processing unit IM-CU.

In a next step S3 , the first traffic counters C-M, C-M+1, ..., C-M+N-1 measure periodically within the predefined time period the current data rate of the data packets to be switched to the first group of optical transmission paths and verify, whether the current data rate exceeds the transmission capacity of a corresponding one of the first group of optical transmission paths.

When the transmission capacity is not exceeded, in a further step S4 the first data packets of the at least one input data stream are switched to a corresponding one of the first group of optical transmission paths and in a next step S5, the fixed wavelength optical signal carrying the first data packets is transmitted by the one of the fixed wavelength optical transmitter modules FW-TM-1, FW-TM-2, ..., FW-TM-N.

When the transmission capacity is exceeded, the steps S4 and S5 are executed and in a further step S6 the second data packets of the at least one input data stream are switched to at least one of the second group of optical transmission paths and in a next step S7, the at least one tunable wavelength optical signal carrying the second data packets is transmitted by the at least one tunable wavelength optical transmitter module TW-TM-1, TW-TM-2, ..., TW-TM-M-1 via the at least one of the second group of optical transmission paths.

When the transmission capacity is exceeded so much that the excess data packets cannot be handled by the one of the second group of optical transmission paths, in one further step S8 or several further steps S8 the third, fourth, ..., nth data packets of the at least one input data stream are switched to at least one further of the second group of optical transmission paths and in one further next step S7 or several further next steps S7, the one or several further tunable wavelength optical signals carrying the third, fourth, ..., nth data packets are transmitted by the selected at least one further of the tunable wavelength optical transmitter modules TW-TM-1, TW-TM-2, ..., TW-TM-M-1 via at least one further of the second group of optical transmission paths.

The method MET1-IM is repeated continuously as long as data packets are received by the at least one input data stream, which is indicated by an arrow from END to START.

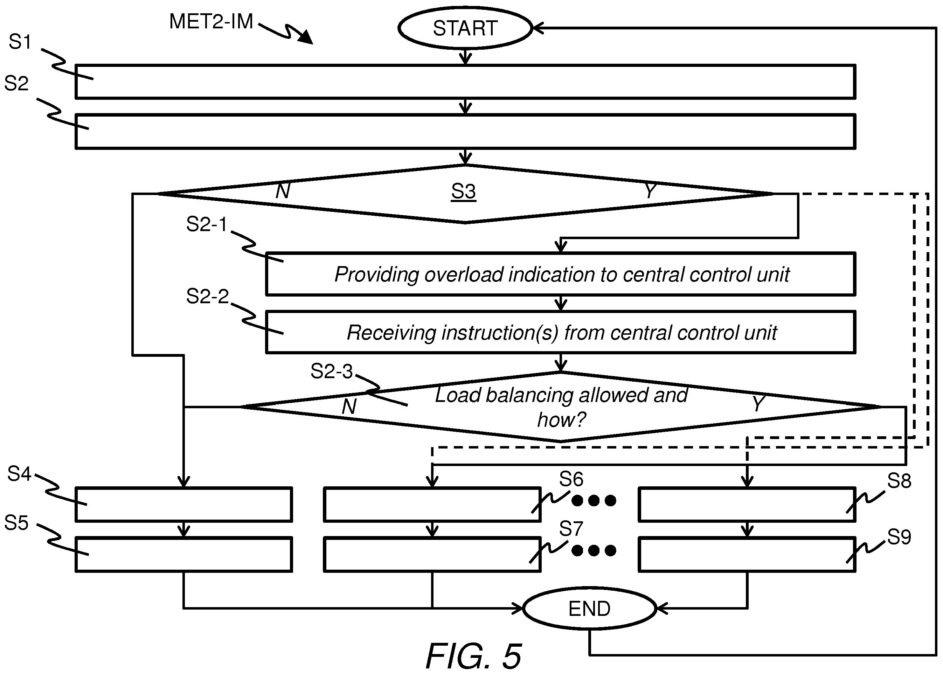

Figure 5 shows schematically a flow diagram of a method MET2-IM for operating the input module IM of the switching system RSS according to a second exemplary embodiment. The elements in Figure 5 that correspond to elements of Figure 4 have been designated by same reference numerals.

The method MET1-IM which has been described above with respect to Figure 4 is extended with respect to the method MET2-IM in a following way:
Following steps S2-1, S2-2 and S2-3 may be executed only once, when the current data rate exceeds the transmission capacity of a corresponding one of the first group of optical transmission paths and as long as the current data rate exceeds the transmission capacity (see arrows with permanent lines between steps S-3 and S6, S8). When the steps S2-1, S2-2 and S2-3 have been executed already once and the current data rate still exceeds the transmission capacity, the step S6 and if necessary also the steps S8 may be executed immediately without executing the intermediate steps S2-1, S2-2 and S2-3 again.

When the transmission capacity is exceeded, in the further step S2-1, the processing unit IM-CU of the input module IM provides the indication to the central control unit CCU, that the data rate of the at least one input data stream has exceeded the maximum transmission capacity.

In the next step S-2, the processing unit IM-CU receives the instruction from the central control unit CCU, either to switch or not to switch the at least second data packets to the one of the tunable wavelength optical transmitter modules TW-TM-1, TW-TM-2, ..., TW-TM-M-1.

In the further step S-3, the processing unit IM-CU interprets the instruction and verifies, whether a load balancing at the input module IM is allowed to switch the at least second data packets to the one of the second group of optical transmission paths. When the load balancing is not allowed based on the instruction, the method MET2-IM continues only with steps S4 and S5. When else the load balancing is allowed based on the input module instruction, the method MET2-IM continues with the steps S6 and S7 and when instructed by the central control unit CCU also with the steps S8 and S9.

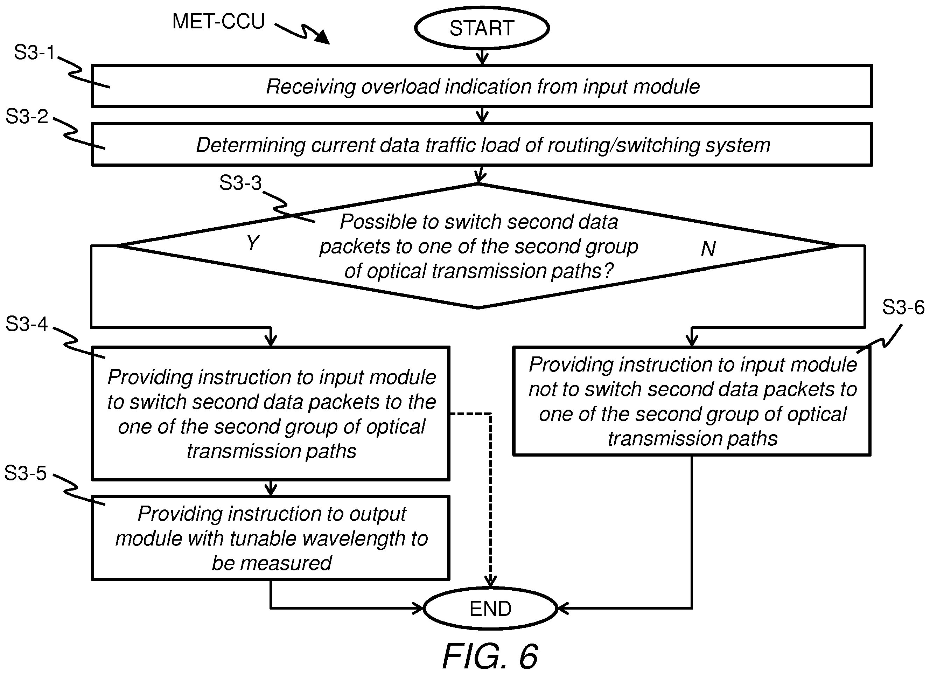

Figure 6 shows schematically a flow diagram of a method MET-CCU for operating the central control unit CCU of the switching system RSS according to an exemplary embodiment.

In a first step S3-1, the indication from one of the input modules IM-1, IM-2, IM-3, ..., IM-N is received that the data rate of at least one input data stream received at the one of the input modules IM-1, IM-2, IM-3, ..., IM-N exceeds the maximum transmission capacity.

In a further step S3-2, the central control unit CU determines the current data traffic load of the switching system RSS by using for example the tracking table as mentioned above.

In a next step S3-3, the central control unit CU verifies, whether the at least second data packets of the at least one input data stream of the one of the input modules IM-1, IM-2, IM-3, ..., IM-N shall be switched or not switched to one of the second group of optical transmission paths.

When the at least second data packets shall be switched, in a further step S3-4 the central control unit CU provides the instruction to the one of the input modules IM-1, IM-2, IM-3, ..., IM-N to switch the at least second data packets to the one of the second group of optical transmission paths. The instruction may contain an indication, which tunable wavelength shall be used at which one of the tunable wavelength optical transmitter modules TW-TM-1, TW-TM-2, ..., TW-TM-M-1.

In a next step S3-5, the central control unit CCU may preferably further provide an instruction to the corresponding one of the output modules OM-1, OM-2, OM-3, ..., OM-N which tunable wavelength should be used at a corresponding one of the further optical receiver modules RX-1, RX-2, ..., RX-M-1 as a reception wavelength. Alternatively, the method MET-CCU ends after the step S3-4.

When else the at least second data packets shall not be switched, in a further step S3-6 the central control unit CU provides the instruction to the one of the input modules IM-1, IM-2, IM-3, ..., IM-N not to switch the at least second data packets to one of the second group of optical transmission paths.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for performing a certain function" shall be understood as functional blocks comprising circuitry that is adapted for performing the certain function, respectively. Hence, a "means for something" may as well be understood as a "means being adapted or suited for something". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, DSP hardware, network processor, ASIC, FPGA, read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that the methods MET1-IM, MET2-IM, MET-CCU disclosed in the specification or in the claims may be implemented by a device having means for performing each of the respective steps of these methods. Preferably, a computer program product may contain computer-executable instructions for performing the methods MET1-IM, MET2-IM, MET-CCU, when the computer program product is executed on a programmable hardware device such as a DSP, an ASIC or an FPGA. Preferably, a digital data storage device may encode a machine-executable program of instructions to perform the methods MET1-IM, MET2-IM, MET-CCU.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. A switching system (RSS) for switching data traffic in a data network comprising:
- at least two input modules (IM-1, IM-2, IM-3, ..., IM-N) configured to receive at least one input data stream, further configured to transmit first data packets of said at least one input data stream by a fixed wavelength optical signal having a fixed wavelength via an optical transmission path to one of at least two output modules (OM-1, OM-2, OM-3, ..., OM-N) and even further configured to transmit at least second data packets of said at least one input data stream by at least one tunable wavelength optical signal having a tunable wavelength via at least one further optical transmission path to said one of said at least two output modules (OM-1, OM-2, OM-3, ..., OM-N), when a data rate of said at least one input data stream exceeds a maximum transmission capacity of said optical transmission path,
- an optical routing subsystem (ORSS) connected to said at least two input modules (IM-1, IM-2, IM-3, ..., IM-N) and to said at least two output modules (OM-1, OM-2, OM-3, ..., OM-N) and configured to route said fixed wavelength optical signal via said optical transmission path and said at least one tunable wavelength optical signal via said at least one further optical transmission path from one of said at least two input modules (IM-1, IM-2, IM-3, ..., IM-N) to said one of said at least two output modules (OM-1, OM-2, OM-3, ..., OM-N), and
- said at least two output modules (OM-1, OM-2, OM-3, ..., OM-N) configured to output at least one output data stream
, wherein said optical routing subsystem (RSS) comprises:
- at least two fixed wavelength optical transmitter modules (FW-TM-1, FW-TM-2, ..., FW-TM-N) for each of said at least two input modules (IM-1, IM-2, IM-3, ..., IM-N),
- at least two tunable wavelength optical transmitter modules (TW-TM-1, TW-TM-2, ..., TW-TM-M-1) for each of said at least two input modules (IM-1, IM-2, IM-3, ..., IM-N),
- at least two optical multiplexer units (MUX-1, MUX-2, MUX-3, ..., MUX-N) each configured to multiplex at least two fixed wavelength optical signals of said at least two fixed wavelength optical transmitter modules (FW-TM-1, FW-TM-2, ..., FW-TM-N) of one said at least two input modules (IM-1, IM-2, IM-3, ..., IM-N),
- an optical router unit (MD-60) configured to route each fixed wavelength optical signal of said at least two multiplexed fixed wavelength optical signals to one of at least two output ports of said optical router unit (MD-60) based on a fixed wavelength of said fixed wavelength optical signal,
- at least two optical demultiplexer units (DEMUX-1, DEMUX-2, DEMUX-3, ..., DEMUX-N) each configured to demultiplex fixed wavelength optical signals being received from one of said at least two output ports of said optical router unit (MD-60) into separate fixed wavelength optical signals having a single fixed wavelength for separate reception by one of at least two optical receiver modules (RX-M, RX-M+1, ..., RX-M+N-1) of one of said at least two output modules (OM-1, OM-2, OM-3, ..., OM-N), and
- at least two further optical router units (M-1, ..., MD-59) each configured to route each tunable wavelength optical signal of at least two tunable wavelength optical signals of one of said at lease two tunable wavelength optical transmitter modules (TW-TM-1, TW..TM..2, ..., TW-TM-M-1) of each of said at least two input modules (IM-1, IM-2, IM-3, ..., IM-N] based on a tunable wavelength of said tunable wavelength optical signal for separate reception by one of at least two further optical receiver modules (RX-1, RX-2, ..., RX-M-1) of one of said at least two output modules (OM-1, OM-2, OM-3, ..., OM-N).

2. The switching system (RSS) according to claim 1, wherein said switching system (RSS) comprises a chassis (SC) that comprises said optical router unit (MD-60) and said at least two further optical router units (MD-1, ..., MD-59).

3. The switching system (RSS) according to claim 1, wherein said input module (IM) comprises:
- at least one input port (IMIP-1, IMIP-2, IMIP-3, ..., IMIP-M) configured to receive at least one input data stream,
- a processing unit (IM-CU) configured to determine, whether a data rate of said at least one input data stream to be transmitted from said input module (IM) to one of at least two output modules (OM-1, OM-2, OM-3, ..., OM-N) of said switching system (RSS) via an optical transmission path by a fixed wavelength optical signal having a fixed wavelength exceeds a maximum transmission capacity of said optical transmission path,
- a packet switching module (IMPS-M) configured to switch at least first data packets of said at least one input data stream to said optical transmission path and to switch at least second data packets of said at least one input data stream to at least one further optical transmission path from said input module (IM) to said one of said at least two output modules (OM-1, OM-2, OM-3, ..., OM-N), when said data rate of said at least one input data stream exceeds said maximum transmission capacity,
- at least one fixed wavelength optical transmitter module (FW-TM-1, FW-TM-2, ..., FW-TM-N) configured to transmit via said optical transmission path said fixed wavelength optical signal carrying said at least first data packets, and
- at least one tunable wavelength optical transmitter module (TW-TM-1, TW-TM-2, ..., TW-TM-M-1) reconfigurable to transmit via said at least one further optical transmission path a tunable wavelength optical signal having a tunable wavelength and carrying said at least second data packets.

4. The switching system (RSS) according to claim 3, wherein said input module (IM) further comprises at least one traffic analyzer and buffer unit (TS-1, TS-2, TS-3, ..., TS-M) configured to analyze destination addresses of data packets of said at least one input stream being received via said at least one input port (IMIP-1, IMIP-2, IMIP-3, ..., IMIP-M), further configured to buffer said data packets and even further configured to provide indications of said destination addresses to said processing unit (IM-CU).

5. The switching system (RSS) according to claim 4, wherein said processing unit (IM-CU) comprises at least one traffic counter (C-1, C-2, C-3, ..., C-M] configured to determine periodically within a predefined time period a current data packet rate or amount of data packets of said at least one input data stream to be switched to said optical transmission path based on said received indications and further configured to reconfigure said packet switching module (IMPS-M) to switch said at least second data packets to said at least one further optical transmission path, when said data rate of said at least one input data stream exceeds said maximum transmission capacity.

6. The switching system (RSS) according to claim 5, wherein said processing unit (IM-CU) is further configured to determine one of said optical transmission path and said at least one further optical transmission path to be applied for routing said data packets to said one of said at least two output modules (OM-1, OM-2, OM-3, ..., OM-N] and is further configured to provide indications to said at least one traffic analyzer and buffer unit (TS-1, TS-2, TS-3, ..., TS-M) about said determined optical transmission path or said determined at least one further optical transmission path.

7. The switching system (RSS) according to claim 6, wherein said data packets are buffered at said at least one traffic analyzer and buffer unit (TS-1, TS-2, TS-3, ..., TS-M) until said indications for said determined optical transmission path or said determined at least one further optical transmission path are received at said at least one traffic analyzer and buffer unit (TS-1, TS-2, TS-3, ..., TS-M).

8. The switching system (RSS) according to any of the preceding claims 3 to 7, wherein said input module (IM) comprises a number M of input ports (IMIP-1, IMIP-2, IMIP-3, ..., IMIP-M), a number M-1 of tunable wavelength optical transmitter modules (TW-TM-1, TW-TM..2, ..., TW-TM-M-1) each configurable to transmit a tunable wavelength optical signal having a tunable wavelength and a number N of fixed wavelength optical transmitter modules (FW-TM-1, FW-TM-2, ..., FW-TM-N) each configured to transmit a dedicated fixed wavelength optical signal having a unique fixed wavelength and wherein said number N of fixed wavelength optical transmitter modules (FW-TM-1, FW-TM-2, ..., FW-TM-N) is equal to a number of said at least two output modules (OM) of said switching system (RSS).

9. The switching system (RSS) according to any of the preceding claims 3 to 7, wherein said input module further comprises an interface (CML-IM) to a central control unit (CCU) of said switching system (RSS) and wherein said interface (CML-IM) is configured to receive an instruction from said central control unit (CCU) for switching or not switching said at least second data packets to said at least one further optical transmission path, when said data rate of said at least one input data stream exceeds said maximum transmission capacity.

10. The switching system (RSS) according to any of the preceding claims 3 to 7, wherein said maximum transmission capacity depends on at least one of the following:
- a predefined storage capacity of a traffic aggregation unit (TA-M, TA-M+1, ..., TA-M+N-1) collecting data packets for said optical transmission path,
- a bandwidth of said at least one fixed wavelength optical transmitter module (FW-TM-1, FW-TM-2, ..., FW-TM-N),
- a bandwidth of an optical component (MUX-1, ..., MUX-N, MD-1, ..., MD-60, DEMUX-1, ..., DEMUX-N) of said optical transmission path between said at least one fixed wavelength optical transmitter module (FW-TM-1, FW-TM-2, ..., FW-TM-N) and a receive module (RX-M, ..., RX-M+N-1) of an output module (OM-1, OM-2, OM-3, ..., OM-N) of said switching system (RSS),
- a bandwidth of said receiver module (RX-M, ..., RX-M+N-1).

11. The switching system (RSS) according to claim 10, wherein said predefined storage capacity is adapted to a time period for tuning said at least one tunable wavelength optical transmitter module (TW-TM-1, TW-TM-2, ..., TW-TM-M-1) to said tunable wavelength.

12. The switching system (RSS) according to claim 1, wherein the switching system (RSS) further includes a central control unit (CCU) which comprises:
- at least one port (PIM-1,...,PIM-N) configured to receive from said input module (IM-1, IM-2, IM-3, ..., IM-N) of said switching system (RSS) an indication that a data rate of at least one input data stream received at said input module (IM-1, IM-2, IM-3, ..., IM-N) and to be transmitted to an output module (OM-1, OM-2, OM-3, ..., OM-N) of said switching system (RSS) by a fixed wavelength optical signal having a fixed wavelength exceeds a maximum transmission capacity of an optical transmission path of said switching system (RSS) from said input module (IM) to said output module (OM-1, OM-2, OM-3, ..., OM-N) and further configured to provide an instruction to said input module (IM-1, IM-2, IM-3, ..., IM-N) either to switch or not to switch at least second data packets of said at least one input data stream to at least one tunable wavelength optical transmitter module (TW-TM-1, TW-TM-2, ..., TW-TM-M-1) configurable to transmit a tunable optical signal having a tunable wavelength via at least one further optical transmission path of said switching system (RSS) from said input module (IM) to said output module (OM-1, OM-2, OM-3, ..., OM-N), and
- a processor (P) configured to determine, whether said at least second data packets shall be switched or not switched to said at least one tunable wavelength optical transmitter module (TW-TM-1, TW-TM-2, ..., TW-TM-M-1) based on a current data traffic load of said switching system (RSS).

13. The switching system (RSS) according to claim 12, wherein said central control unit (CCU) further comprises at least one further port (POM-1, ..., POM-N) configured to provide to said output module (OM-1, OM-2, OM-3, ..., OM-N) an instruction to tune an optical receiver module (RX-1, RX-2, ..., RX-M-1) of said output module (OM-1, OM-2, OM-3, ..., OM-N) to said tunable wavelength.

14. The switching system (RSS) according to claim 12 or claim 13, wherein said central control unit (CCU) is further configured to control said input module (IM-1, IM-2, IM-3, ..., IM-N) and at least one further input module (IM-1, IM-2, IM-3, ..., IM-N) of said switching system (RSS) and wherein said central control unit (CCU) is further configured to coordinate between said input module (IM-1, IM-2, IM-3, ..., IM-N) and said at least one further input module (IM-1, IM-2, IM-3, ..., IM-N) a switching of said second data packets to said at least one tunable wavelength optical transmitter module (TW-TM-1, TW-TM-2, ..., TW-TM-M-1), when said data rate of said at least one input data stream exceeds said maximum transmission capacity of said optical transmission path.

## Patentansprüche

1. Ein Umschaltsystem (RSS) zum Umschalten des Datenverkehrs in einem Datennetzwerk, umfassend:
- mindestens zwei Eingangsmodule (IM-1, 2-IM, IM-3, ..., IM-N), welche konfiguriert sind, um mindestens einen Eingangsdatenstrom zu empfangen, und weiter konfiguriert sind, um erste Datenpakete dieses mindestens einen Eingangsdatenstroms, über ein wellenlängenfixiertes optisches Signal mit fester Wellenlänge entlang eines optischen Übertragungsweges, zu einem von mindestens zwei Ausgangsmodulen (OM-1, OM-2, OM-3, ..., OM N) zu übertragen, und sogar weiter konfiguriert sind, um mindestens zweite Datenpakete dieses mindestens einen Eingangsdatenstroms, über mindestens ein wellenlängenabstimmbares optischen Signal mit einer abstimmbaren Wellenlänge entlang mindestens eines weiteren optischen Übertragungsweges zu diesem einen der mindestens zwei Ausgangsmodule (OM1-, OM-2, OM-3, ..., OM-N) zu übertragen, wenn eine Datenrate des mindestens einen Eingangsdatenstroms eine maximale Übertragungskapazität dieses optischen Übertragungswegs überschreitet,
- ein optisches Routing-Subsystem (ORSS), welches mit den mindestens zwei Eingangsmodulen (IM-1, IM-2, IM-3, ..., IM-N) und den mindestens zwei Ausgangsmodulen (OM-1, OM-2, OM-3, ..., OM-N) verbunden ist und konfiguriert ist, um dieses wellenlängenfixierte erstes optische Signal entlang diesem mindestens einen weiteren optischen Übertragungsweg von einem dieser mindestens zwei Eingangsmodule (IM-1, IM-2, IM-3, ..., IM-N) zu diesem einen der mindestens zwei Ausgangsmodule (OM-1, OM-2, OM-3, ..., OM-N) zu leiten, und
- diese mindestens zwei Ausgangsmodule (OM-1, OM-2, OM-3, ..., OM-N) konfiguriert sind, um mindestens einen Ausgangsdatenstrom abzugeben,
wobei dieses optische Routing-Subsystem (ORSS) umfasst:
- mindestens zwei wellenlängenfixierte optische Sende-Module (FW-TM-1, FW-TM-2, ..., FW-TM -N) für jedes der mindestens zwei Eingangsmodule (IM-1, IM-2, IM-3, ..., IM-N),
- mindestens zwei wellenlängenabstimmbare optische Sende-Module (TW-TM-1, TW-TM-2, ..., TW-TM-M-1) für jedes dieser mindestens zwei Eingangsmodule (IM-1, 2-IM, IM-3, ..., IM-N),
- mindestens zwei optische Multiplexer-Einheiten (MUX-1, MUX-2, MUX-3, ..., MUX-N), welche jede konfiguriert ist, um mindestens zwei wellenlängenfixierte optische Signale dieser mindestens zwei wellenlängenfixierten optischen Sende-Module (FW -TM-1, FW-TM-2, ..., FW-TM-N) eines der mindestens zwei Eingangsmodule (IM-1, IM-2, IM-3, ..., IM-N) zu multiplexen,
- eine optische Router-Einheit (MD-60), die konfiguriert ist, um jedes wellenlängenfixierte optische Signal dieser mindestens zwei multiplexten wellenlängenfixierten optischen Signale zu einem von mindestens zwei Ausgangsanschlüssen dieser optischen Router-Einheit (MD-60) zu leiten,
- mindestens zwei optische Demultiplexer-Einheiten (DEMUX-1, DEMUX-2, DEMUX-3, ..., DEMUX-N), die jeweils konfiguriert sind, um von einem der mindestens zwei Ausgangsanschlüsse dieser optischen Router-Einheit (MD-60) empfangene wellenlängenfixierte optische Signale, in separate wellenlängenfixierte optische Signale mit einer einzelnen festen Wellenlänge für den separaten Empfang von einem der mindestens zwei optischen Empfangsmodule (RX-M, RX-M+1, ..., RX-M+N-1) eines der mindestens zwei Ausgangsmodule (OM-1, OM-2, OM-3, ..., OM-N) zu demultiplexen, und
- mindestens zwei weitere optische Router-Einheiten (MD-1, ..., MD59), welche jede konfiguriert ist, um jedes wellenlängenabstimmbare optische Signal der mindestens zwei wellenlängenabstimmbaren optischen Signale eines dieser mindestens zwei wellenlängenabstimmbaren optischen Sendermodule (TW-TM -1, TW-TM-2, ..., TW-TM-M-1) jedes dieser mindestens zwei Eingangsmodule (IM-1, IM-2, IM-3, ..., IM-N), auf der Grundlage einer abstimmbaren Wellenlänge des wellenlängenabstimmbaren optischen Signals für den separaten Empfang eines von mindestens zwei weiteren optischen Empfangsmodulen (RX-1, RX-2, ..., RX-M-1) von einem der mindestens zwei Ausgangsmodule (OM-1, OM-2, OM-3, ..., OM-N), weiterzuleiten.

2. Umschaltsystem (RSS) nach Anspruch 1, wobei das Umschaltsystem (RSS) ein Chassis (SC) umfasst, welches diese optische Router-Einheit (MD-60) und diese mindestens zwei weiteren optischen Router-Einheiten (MD-1,..., MD-59) aufweist.

3. Umschaltsystem (RSS) nach Anspruch 1, wobei dieses Eingangsmodul (IM) umfasst:
- mindestens einen Eingangsanschluss (IMIP-1, IMIP-2, IMIP-3, ..., IMIP-M), der konfiguriert ist, um mindestens einen Eingangs-Datenstrom zu empfangen,
- eine Verarbeitungs-Einheit (IM-CU), die konfiguriert ist, um zu bestimmen, ob eine Datenrate dieses mindestens einen Eingangs-Datenstroms, der von dem Eingangsmodul (IM) zu einem von mindestens zwei Ausgangsmodulen (OM-1, OM-2, OM-3, ..., OM-N) dieses Umschaltsystems (RSS) via eines optischen Übertragungsweges über ein wellenlängenfixiertes optisches Signal mit einer festen Wellenlänge zu übertragen ist, eine maximale Übertragungskapazität dieses optischen Übertragungsweges überschreitet,
- ein Packet-Umschaltmodul (IMPS-M), welches konfiguriert ist, um mindestens erste Datenpakete dieses mindestens einen Eingangsdatenstroms zum optischen Übertragungsweg umzuleiten und um mindestens zweite Datenpakete des mindestens einen Eingangsdatenstroms zum mindestens einen weiteren optischen Übertragungsweg vom Eingangsmodul (IM) zum einen der mindestens zwei Ausgangsmodule (OM-1, OM-2, OM-3, ..., OM-N) umzuleiten, wenn die Datenrate dieses mindestens einen Eingangsdatenstroms diese maximale Übertragungskapazität übersteigt,
- mindestens ein wellenlängenfixiertes optisches Sende-Modul (FW-TM-1, FW-TM-2, ..., FW-TM-N), welches konfiguriert ist, um dieses wellenlängenfixierte optische Signal, welches diese mindestens ersten Datenpakete trägt, via diesen optischen Übertragungsweg zu übertragen, und
- mindestens ein wellenlängenabstimmbares optisches Sende-Modul (TW-TM-1, TW-TM-2, ..., TW-TM-M-1), welches rekonfigurierbar ist, um via dieses mindestens einen weiteren optischen Übertragungsweges ein wellenlängenabstimmbares optischen Signal mit einer abstimmbaren Wellenlänge und welches diese mindestens zweiten Datenpakete trägt, zu übertragen.

4. Umschaltsystem (RSS) nach Anspruch 3, wobei das Eingangsmodul (IM) ferner mindestens einen Traffic-Analyzer und eine Buffer-Einheit (TS-1, TS-2, TS-3, ..., TS-M) umfasst, die konfiguriert sind, um die Zieladressen der Datenpakete des mindestens einen, via des mindestens einen Eingangs-Anschlusses (IMIP-1, IMIP-2, IMIP-3, ..., IMIP-M), empfangenen Eingangsstroms, zu analysieren und weiter konfiguriert sind, um diese Datenpakete zwischenzuspeichern und sogar weiter konfiguriert sind, um Angaben zu den Zieladressen an die Verarbeitungseinheit (IM-CU) bereitzustellen.

5. Umschaltsystem (RSS) nach Anspruch 4, wobei diese Verarbeitungseinheit (IM-CU) mindestens einen Traffic-Zähler (C-1, C-2, C-3, ..., C-M) umfasst, der konfiguriert ist, um in regelmässigen Abständen innerhalb einer vorgegebene Zeitdauer eine aktuelle Datenpaket-Rate oder die Menge von Datenpaketen dieses mindestens einen Eingangs-Datenstrom, die zu dem optischen Übertragungsweg geschaltet werden, auf Grundlage der empfangenen Angaben zu bestimmen, und weiter konfiguriert ist, um dieses Paketumschalt-Modul (IMPS-M) zum Umleiten dieser mindestens zweiten Datenpakete zu dem mindestens einen weiteren optischen Übertragungsweg, zu rekonfigurieren, wenn die Daten-Rate des mindestens einen Eingangs-Datenstroms die maximale Übertragungskapazität übersteigt.

6. Umschaltsystem (RSS) nach Anspruch 5, wobei die Verarbeitungseinheit (IM-CU) weiter konfiguriert ist, um einen der optischen Übertragungswege und den mindestens einen weiteren optischen Übertragungsweg, der zum Umleiten der Daten-Packete zu dem einen der mindestens zwei Ausgangsmodule (OM-1, OM-2, OM-3, ..., OM-N) verwendet wird, zu bestimmen, und weiter konfiguriert ist, um Angaben für den mindestens einen Traffic-Analyzer und die Buffer-Einheit (TS-1 , TS-2, TS-3, ..., TS-M) über den bestimmten optischen Übertragungsweg oder den bestimmten mindestens einen weiteren optischen Übertragungsweg bereitzustellen.

7. Umschaltsystem (RSS) nach Anspruch 6, wobei die Datenpakete in dem mindestens einen Traffic-Analyzer und der Buffer-Einheit (TS-1, TS-2, TS-3, ..., TS-M) zwischengespeichert werden, bis die Angaben zu dem bestimmten optischen Übertragungsweg oder zu dem mindestens einen weiteren optischen Übertragungsweg bei dem mindestens einen Traffic-Analyzer und der Buffer-Einheit (TS-1, TS-2, TS-3, ..., TS-M) empfangen werden.

8. Umschaltsystem (RSS) nach einem der vorgehenden Ansprüche 3 bis 7. wobei dieses Eingangsmodul (IM) umfasst: eine Anzahl M von Eingangsanschlüssen (IMIP-1, IMIP-2, IMIP-3, ..., IMIP-M), eine Anzahl von M-1 von wellenlängenabstimmbaren optischen Sende-Modulen (TW-TM-1, TW-TM-2, ..., TW-TM-M-1), die jeweils konfigurierbar sind, um ein wellenlängenabstimmbares optisches Signal mit einer abstimmbaren Wellenlänge zu übertragen, und eine Anzahl N von wellenlängenfixierten optischen Sende-Modulen (FW-TM-1, FW-TM-2, ..., FW-TM-N), welche jeweils konfiguriert sind, um ein fest zugeordnetes wellenlängenfixiertes optisches Signal mit einer eindeutigen festen Wellenlänge zu übertragen, und wobei diese Anzahl N wellenlängenfixierter optischer Sende-Module (FW-TM-1, FW-TM-2, ..., FW-TM-N) gleich der Anzahl der mindestens zwei Ausgangsmodule (OM) dieses Umschaltsystems (RSS) ist.

9. Umschaltsystem (RSS) nach einem der vorgehenden Ansprüche 3 bis 7, wobei dieses Eingangsmodul weiter umfasst: eine Schnittstelle (CML-IM) mit einer zentralen Steuereinheit (CCU) des Umschaltsystems (RSS), und wobei diese Schnittstelle (CML-IM) konfiguriert ist, um eine Anweisung von dieser zentralen Steuereinheit (CCU) zum Umschalten oder Nicht-Umschalten der mindestens zweiten Datenpakete auf den mindestens einen weiteren optischen Übertragungsweg zu empfangen, wenn die Daten-Rate des mindestens einen Eingangs-Datenstroms die maximale Übertragungskapazität überschreitet.

10. Umschaltsystem (RSS) nach einem der vorgehenden Ansprüche 3 bis 7, wobei die maximale Übertragungskapazität abhängig ist von mindestens einem der folgenden Punkte:
- einer vorgegebenen Speicherkapazität einer Traffic-Aggregationseinheit (TA-M, TA-M+1, ..., TA-M+N-1), welche Datenpakete sammelt für den optischen Übertragungsweg,
- einer Bandbreite des mindestens einen wellenlängenfixierten optischen Sende-Moduls (FW-TM-1, FW-TM-2, ..., FW-TM-N),
- einer Bandbreite einer optischen Komponente (MUX-1, ..., MUX-N, MD-1, ..., MD-60, DEMUX-1, ..., DEMUX-N) des optischen Übertragungsweges zwischen dem mindestens einen wellenlängenfixierten optischen Sende-Modul (FW-TM-1, FW-TM-2, ..., FW-TM-N) und einem Empfangsmodul (RX-M, ..., RX-M+ N-1) eines Ausgangsmoduls (OM-1, OM-2, OM-3, ..., OM-N) des Umschaltsystems (RSS),
- einer Bandbreite des Empfangsmoduls (RX-M, ..., RX-M+N-1).

11. Umschaltsystem (RSS) nach Anspruch 1, wobei die vorgegebene Speicherkapazität an eine Zeitdauer für das Abstimmen des wenigstens einen wellenlängenabstimmbaren optischen Sendermoduls (TW-TM-1, TW-TM-2, ..., TW-TM-M-1) mit der abstimmbaren Wellenlänge angepasst ist.

12. Umschaltsystem (RSS) nach Anspruch 1, wobei des Umschaltsystem (RSS) umfasst:
- mindestens einen Anschluss (PIM-1, ..., PIM-N), welcher konfiguriert ist, um von dem Eingangsmodul (IM-1, IM-2, IM-3, ..., IM-N) des Umschaltsystems (RSS) eine Angabe zu empfangen, dass eine Datenrate mindestens eines am Eingangsmodul (IM-1, IM-2, IM-3, ..., IM-N) empfangener Eingangs-Datenstroms und von einem wellenlängenfixen optischen Signal mit einer festen Wellenlänge an ein Ausgangsmodul (OM-1, OM-2, OM-3, ..., OM-N) des Umschaltsystems (RSS) zu übertragen ist, eine maximale Übertragungskapazität eines optischen Übertragungsweges vom Eingangsmodul (IM) zum Ausgangsmodul (OM-1, OM-2, OM-3, ..., OM-N) des Schaltsystems (RSS) überschreitet, und weiter konfiguriert ist, um eine Anweisung an das Eingangsmodul (IM-1, IM-2, IM-3, ..., IM-N) bereitzustellen, um mindestens zweite Datenpakete des mindestens einen Eingangs-Datenstroms entweder umzuschalten oder nichtumzuschalten zum mindestens einen wellenlängenabstimmbaren optischen Sende-Modul (TW-TM-1, TW-TM-2, ..., TW-TM-M-1), welcher konfigurierbar ist, um ein abstimmbares optisches Signal mit einer abstimmbaren Wellenlänge via mindestens einen weiteren optischen Übertragungsweg des Umschaltsystems (RSS) vom Eingangsmodul (IM) zum Ausgangsmodul (OM-1, OM-2, OM-3, ..., OM-N) zu übertragen, und
- einen Prozessor (P), der konfiguriert ist, um zu bestimmen, ob die mindestens zweiten Datenpakete zu dem mindestens einen wellenlängenabstimmbaren optischen Sende-Modul (TW-TM-1, TW-TM-2, ..., TW-TM-M-1) auf Grund einer aktuellen Daten-Traffic-Last des Umschaltsystems (RSS) umgeleitet oder nicht-umgeleitet werden sollen.

13. Umschaltsystem nach Anspruch 12, wobei die zentralen Steuereinheit (CCU) weiter umfasst mindestens ein weiterer Anschluss (POM-1, ..., POM-N), der konfiguriert ist, um eine Anweisung zum Abstimmen eines optischen Empfangsmoduls (RX-1, RX-2, ..., RX-M-1) dieses Ausgangsmoduls (OM-1, OM-2, OM-3, ..., OM-N) mit der abstimmbaren Wellenlänge, an das Ausgangsmodul (OM-1, OM-2, OM-3, ..., OM-N) bereitzustellen.

14. Umschaltsystem (RSS) nach Anspruch 12 oder 13, wobei die zentrale Steuereinheit (CCU) weiter konfiguriert ist, um das Eingangsmodul (IM-1, IM-2, IM-3, ..., IM- N) und mindestens ein weiteres Eingangsmodul (IM-1, IM-2, IM-3, ..., IM-N) des Umschaltsystem (RSS) zu steuern, und wobei die zentrale Steuereinheit (CCU) weiter konfiguriert ist, um zwischen dem Eingangsmodul (IM-1, IM-2, iM-3, ..., IM-N) und dem mindestens einen weiteren Eingangsmodul (IM-1, IM-2, IM-3, ..., IM-N) ein Umschalten von den zweiten Datenpaketen zu dem mindestens einen wellenlängenabstimmbaren optischen Sende-Modul (TW-TM-1, TW-TM-2, ..., TW-TM-M-1) zu koordinieren, wenn die Datenrate des mindestens einen Eingangsdatenstroms die maximale Übertragungskapazität des optischen Übertragungsweges überschreitet.

## Revendications

1. Système de commutation (RSS) pour la commutation de trafic de données dans un réseau de données comprenant :
au moins deux modules d'entrée (IM-1, IM-2, IM-3, ..., IM-N) configurés pour recevoir au moins un flux de données d'entrée, configurés en outre pour transmettre des premiers paquets de données dudit au moins un flux de données d'entrée par le biais d'un signal optique à longueur d'onde fixe présentant une longueur d'onde fixe, via un chemin de transmission optique vers au moins l'un d'au moins deux modules de sortie (OM-1, OM-2, OM-3, ..., OM-N), et en outre configurés pour transmettre des seconds paquets de données dudit au moins un flux de données d'entrée par le biais d'au moins signal optique à longueur d'onde réglable présentant une longueur d'onde réglable, via au moins un chemin de transmission optique supplémentaire vers ledit au moins un desdits au moins deux modules de sortie (OM-1, OM-2, OM-3, ..., OM-N), lorsqu'un taux de données dudit au moins un flux de données d'entrée dépasse une capacité maximale de transmission dudit chemin de transmission optique ;
un sous-système de routage optique (ORSS) connecté auxdits au moins deux modules d'entrée (IM-1, IM-2, IM-3, ..., IM-N) et auxdits au moins deux modules de sortie (OM-1, OM-2, OM-3, ..., OM-N), configuré pour router ledit signal optique à longueur d'onde fixe via ledit chemin de transmission optique et ledit au moins un signal optique à longueur d'onde réglable via ledit au moins un chemin de transmission supplémentaire depuis l'un desdits au moins deux modules d'entrée (IM-1, IM-2, IM-3, ..., IM-N) vers ledit au moins un desdits au moins deux modules de sortie (OM-1, OM-2, OM-3, ..., OM-N) ; et
lesdits au moins deux modules de sortie (OM-1, OM-2, OM-3, ..., OM-N) étant configurés pour produire en sortie au moins un flux de données de sortie ;
ledit sous-système de routage optique (ORS S) comprenant :
au moins deux modules de transmission optique à longueur d'onde fixe (FW-TM-1, FW-TM-2, ..., FW-TM-N) pour chacun desdits au moins deux modules d'entrée (IM-1, IM-2, IM-3, ..., IM-N);
au moins deux modules de transmission optique à longueur d'onde réglable (TW-TM-1, TW-TM-2, ..., TW-TM-M-1) pour chacun desdits au moins deux modules d'entrée (IM-1, IM-2, IM-3, ..., IM-N) ;
au moins deux unités de multiplexage optique (MUX-1, MUX-2, MUX-3, ..., MUX-N), chacune étant configurée pour effectuer le multiplexage d'au moins deux signaux optiques à longueur d'onde fixe desdits au moins deux modules de transmission optique à longueur d'onde fixe (FW-TM-1, FW-TM-2, ..., FW-TM-N) d'au moins un desdits deux modules d'entrée (IM-1, IM-2, IM-3, ..., IM-N) ;
une unité de routage optique (MD-60) configurée pour router chaque signal optique à longueur d'onde fixe desdits au moins deux signaux optiques à longueur d'onde fixe multiplexés vers au moins un des ports de sortie de ladite unité de routage optique (MD-60), basé sur une longueur d'onde fixe dudit signal optique à longueur d'onde fixe ;
au moins deux unités de démultiplexage optique (DEMUX-1, DEMUX-2, DEMUX-3, ..., DEMUX-N), chacune étant configurée pour effectuer le démultiplexage, des signaux optiques à longueur d'onde fixe en provenance de l'un desdits au moins deux ports de sortie de ladite unité de routage optique (MD-60), en signaux optiques à longueur d'onde fixe séparés, présentant une longueur d'onde fixe unique pour une réception séparée par l'un d'au moins deux modules de réception optique (RX-M, RX-M+1, ..., RX-M+N-1) d'un desdits au moins deux modules de sortie (OM-1, OM-2, OM-3, ..., OM-N) ; et
au moins deux unités de routage optique supplémentaires (MD-1, ..., MD-59), chacune étant configurée pour router chaque signal optique à longueur d'onde réglable d'au moins deux signaux optiques à longueur d'onde réglables d'un desdits au moins deux modules de transmission optique à longueur d'onde réglable (TW-TM-1, TW-TM-2, ..., TW-TM-M-1) de chacun desdits au moins deux modules d'entrée (IM-1, IM-2, IM-3, ..., IM-N), basé sur une longueur d'onde réglable dudit signal optique à longueur d'onde réglable pour une réception séparée par l'un desdits au moins deux modules de réception optique supplémentaires (RX-1, RX-2, ..., RX-M-1) de l'un desdits au moins deux modules de sortie (OM-1, OM-2, OM-3, ..., OM-N).

2. Système de commutation (RSS) selon la revendication 1, selon lequel ledit système de commutation (RSS) comprend un châssis (SC) qui comprend ladite unité de routage optique (MD-60) et au moins deux unités de routage optique supplémentaires (MD-1, ..., MD-59).

3. Système de commutation (RSS) selon la revendication 1, selon lequel ledit module d'entrée (IM) comprend :
au moins un port d'entrée IMIP-1, IMIP-2, IMIP-3, ..., IMIP-M) configuré pour recevoir au moins un flux de données d'entrée ;
une unité de traitement (IM-CU), configurée pour déterminer si un taux de données dudit au moins un flux de données d'entrée, devant être transmis dudit module d'entrée vers l'un des au moins deux modules de sortie (OM-1, OM-2, OM-3, ..., OM-N) dudit système de commutation (RSS) via un chemin de transmission optique par le biais d'un signal optique à longueur d'onde fixe présentant une longueur d'onde fixe, ne dépasse pas la capacité maximale de transmission dudit chemin de transmission optique ;
un module de commutation de paquets (IMPS-M), configuré pour commuter au moins des premiers paquets de données dudit au moins un flux de données d'entrée dans le chemin de transmission optique et pour commuter au moins des seconds paquets de données dudit au moins un flux de données d'entrée dans au moins un chemin de transmission optique supplémentaire, en provenance dudit module d'entrée vers ledit un desdits au moins deux modules de sortie (OM-1, OM-2, OM-3, ..., OM-N), lorsque ledit taux de données dudit au moins un flux de données d'entrée dépasse la capacité maximale de transmission ;
au moins un module de transmission optique à longueur d'onde fixe (FW-TM-1, FW-TM-2, ..., FW-TM-N), configuré pour transmettre via ledit chemin de transmission optique ledit signal optique à longueur d'onde fixe portant lesdits au moins premiers paquets de données ; et
au moins un module de transmission optique à longueur d'onde réglable (TW-TM-1, TW-TM-2, ..., TW-TM-M-1), celui-ci étant reconfigurable pour transmettre via ledit au moins un chemin de transmission optique supplémentaire un signal optique à longueur d'onde réglable présentant une longueur d'onde réglable portant au moins lesdits seconds paquets de données.

4. Système de commutation (RSS) selon la revendication 3, selon lequel le module d'entrée (IM) comprend en outre au moins une unité d'analyse et de tampon de trafic (TS-1, TS-2, TS-3, ..., TS-M), configurée pour analyser les adresses de destination des paquets de données dudit au moins un flux de données d'entrée reçus depuis ledit au moins un port d'entrée (IMIP-1, IMIP-2, IMIP-3, ..., IMIP-M), l'unité d'analyse et de tampon de trafic étant en outre configurée pour tamponner lesdits paquets de données, et est en outre configurée pour fournir des indications desdits adresses de destination à l'unité de traitement (IM-CU).

5. Système de commutation (RSS) selon la revendication 4, selon lequel ladite unité de traitement (IM-CU) comprend au moins un compteur de trafic (C-1, C-2, C-3, ..., C-M), configuré pour déterminer, de manière périodique selon une période de temps prédéfinie, un taux de paquets de données actuel ou une quantité de paquets de données, dudit au moins un flux de données d'entrée devant être commuté dans le chemin de transmission optique, sur la base d'indications reçues, le compteur de trafic étant en outre configuré pour reconfigurer ledit module de commutation de paquets (IMPS-M), afin de commuter lesdits au moins seconds paquets de données dans ledit au moins un chemin de transmission supplémentaire, lorsque le taux de données dudit au moins un flux de données dépasse la capacité maximale de transmission.

6. Système de commutation (RSS) selon la revendication 5, selon lequel ladite unité de traitement (IM-CU) est en outre configurée pour déterminer l'un parmi ledit chemin de transmission optique et ledit au moins un chemin de transmission optique supplémentaire, à appliquer au routage desdits paquets de données vers ledit un desdits au moins deux modules de sortie (OM-1, OM-2, OM-3, ..., OM-N), et est en outre configurée pour fournir des indications, à ladite au moins une unité d'analyse et de tampon de trafic (TS-1, TS-2, TS-3, ..., TS-M), relatives audit chemin de transmission optique déterminé ou audit au moins un chemin de transmission optique supplémentaire déterminé.

7. Système de commutation (RSS) selon la revendication 6, selon lequel lesdits paquets de données sont mises en tampon au niveau de ladite au moins une unité d'analyse et de tampon de trafic (TS-1, TS-2, TS-3, ..., TS-M) jusqu'à ce que lesdites indications, relatives audit chemin de transmission optique déterminé ou audit au moins un chemin de transmission optique supplémentaire déterminé, ont été reçues par ladite au moins une unité d'analyse et de tampon de trafic (TS-1, TS-2, TS-3, ..., TS-M).

8. Système de commutation (RSS) selon l'une quelconque des revendications 3 à 7 précédentes, selon lequel ledit module d'entrée (IM) comprend :
un nombre M de ports d'entrée (IMIP-1, IMIP-2, IMIP-3, ..., IMIP-M) ;
un nombre M-1 de modules de transmission optique à longueur d'onde réglable (TW-TM-1, TW-TM-2, ..., TW-TM-M-1), chacun étant configurable pour transmettre un signal optique à longueur d'onde réglable présentant une longueur d'onde réglable ; et
un nombre de modules de transmission optique à longueur d'onde fixe (FW-TM-1, FW-TM-2, ..., FW-TM-N), chacun étant configuré pour transmettre un signal optique à longueur d'onde fixe dédié présentant une longueur d'onde fixe unique ; et
selon lequel le nombre N des modules de transmission optique à longueur d'onde fixe (FW-TM-1, FW-TM-2, ..., FW-TM-N) est égal à un nombre desdits au moins deux modules de sortie (OM) dudit système de commutation (RSS).

9. Système de commutation (RSS) selon l'une quelconque des revendications 3 à 7 précédentes, selon lequel ledit module d'entrée comprend en outre une interface (CML-IM) à une unité de commande centrale (CCU) dudit système de commutation (RSS), et selon lequel ladite interface (CML-IM) est configurée pour recevoir une instruction en provenance de ladite unité de commande centrale (CCU) pour effectuer ou non la commutation desdits au moins seconds paquets de données dans ledit au moins un chemin de transmission optique supplémentaire, lorsque le taux de données dudit au moins un flux de données d'entrée dépasse la capacité maximale de transmission.

10. Système de commutation (RSS) selon l'une quelconque des revendications 3 à 7 précédentes, selon lequel ladite capacité maximale de transmission dépend au moins d'un des éléments suivants :
une capacité de stockage prédéterminée d'une unité d'agrégation de trafic (TA-M, TAM+1, ..., TA-M+N-1) effectuant la collecte de paquets de données pour ledit chemin de transmission optique ;
une bande passante dudit au moins un module de transmission optique à longueur d'onde fixe (FW-TM-1, FW-TM-2, ..., FW-TM-N) ;
une bande passante d'un composant optique (MUX-1, ..., MUX-N, MD-1, ..., MD-60, DEMUX-1, ..., DEMUX-N) dudit chemin de transmission optique entre ledit au moins un module de transmission optique à longueur d'onde fixe (FW-TM-1, FW-TM-2, ..., FW-TM-N) et un module de réception (RX-M, ..., RX-M+N-1) d'un module de sortie (OM-1, OM-2, OM-3, ..., OM-N) dudit système de commutation (RSS) ;
une bande passante dudit module de réception (RX-M, ..., RX- M+N-1).

11. Système de commutation (RSS) selon la revendication 10, selon lequel la capacité de stockage prédéterminée est adaptée à une période de temps pour le réglage, dudit au moins un module de transmission optique à longueur d'onde réglable (TW-TM-1, TW-TM-2, ..., TW-TM-M-1), à ladite longueur d'onde réglable.

12. Système de commutation (RSS) selon la revendication 1, selon lequel le système de commutation (RSS) comporte en outre une unité de commande centrale (CCU) comprenant :
au moins un port (PIM-1, ..., PIM-N) configuré pour recevoir, en provenance dudit module d'entrée (IM-1, IM-2, IM-3, ..., IM-N) dudit système de commutation (RSS), une indication qu'un taux de données d'au moins un flux de données d'entrée reçu au niveau dudit module d'entrée (IM-1, IM-2, IM-3, ..., IM-N) et devant être transmis à un module de sortie (OM-1, OM-2, OM-3, ..., OM-N) dudit système de commutation (RSS), par le biais d'un signal optique présentant une longueur d'onde fixe, dépasse une capacité maximale de transmission d'un chemin de transmission optique dudit système de commutation (RSS) en provenance dudit module d'entrée (IM) vers ledit module de sortie (OM-1, OM-2, OM-3, ..., OM-N), le port étant en outre configuré pour fournir une instruction audit module d'entrée (IM-1, IM-2, IM-3, ..., IM-N), d'effectuer ou non la commutation d'au moins de seconds paquets de données dudit au moins un flux de données d'entrée vers au moins un module de transmission optique à longueur d'onde réglable (TW-TM-1, TW-TM-2, ..., TW-TM-M-1), ce dernier étant configurable pour transmettre un signal optique à longueur d'onde réglable présentant une longueur d'onde réglable via au moins un chemin de transmission optique supplémentaire dudit système de commutation (RSS) en provenance dudit module d'entrée (IM) vers ledit module de sortie (OM-1, OM-2, OM-3, ..., OM-N) ; et
un processeur (P) configuré pour déterminer si lesdits au moins seconds paquets de données doivent être commutés ou non vers ledit au moins un module de transmission optique à longueur d'onde réglable (TW-TM-1, TW-TM-2, ..., TW-TM-M-1) sur la base d'une charge actuelle de trafic de données dudit système de commutation (RSS).

13. Système de commutation (RSS) selon la revendication 12, selon lequel ladite unité de commande centrale (CCU) comprend en outre au moins un port supplémentaire (POM-1, ..., POM-N) configuré pour fournir audit module de sortie (OM-1, OM-2, OM-3, ..., OM-N) une instruction pour régler un module de réception optique (RX-1, RX-2, ..., RX-M-1) dudit module de sortie (OM-1, OM-2, OM-3, ..., OM-N) à ladite longueur d'onde réglable.

14. Système de commutation (RSS) selon la revendication 12 ou la revendication 13, selon lequel ladite unité de commande centrale (CCU) est en outre configurée pour commander ledit module d'entrée (IM-1, IM-2, IM-3, ..., IM-N) et au moins un module d'entrée supplémentaire (IM-1, IM-2, IM-3, ..., IM-N) dudit système de commutation (RSS), et selon lequel ladite unité de commande centrale (CCU) est en outre configurée pour coordonner, entre ledit module d'entrée (IM-1, IM-2, IM-3, ..., IM-N) et ledit au moins un module d'entrée supplémentaire (IM-1, IM-2, IM-3, ..., IM-N), une commutation desdits seconds paquets de données vers ledit module de transmission optique à longueur d'onde réglable (TW-TM-1, TW-TM-2, ..., TW-TM-M-1) lorsque ledit taux de données dudit au moins un flux de données d'entrée dépasse ladite capacité maximale dudit chemin de transmission optique.
